(19) Europäisches Patentamt
European Patent Office
Office européen des brevets

(11) **EP 3 778 798 B1**

(12) **EUROPEAN PATENT SPECIFICATION**

(45) Date of publication and mention
of the grant of the patent:
**30.03.2022 Bulletin 2022/13**

(21) Application number: **19778025.7**

(22) Date of filing: **22.03.2019**

(51) International Patent Classification (IPC):
*C09D 11/322* (2014.01)     *B41J 2/01* (2006.01)
*B41J 2/165* (2006.01)     *B41M 5/00* (2006.01)
*B41J 2/21* (2006.01)     *C09D 11/107* (2014.01)
*C09D 11/40* (2014.01)     *C09D 11/54* (2014.01)
*C09D 11/38* (2014.01)

(52) Cooperative Patent Classification (CPC):
**C09D 11/107; B41J 2/01; B41J 2/16538;
B41J 2/2107; C09D 11/322; C09D 11/38;
C09D 11/40; C09D 11/54;** B41J 2002/1655;
B41J 2002/16558

(86) International application number:
**PCT/JP2019/012273**

(87) International publication number:
**WO 2019/188856 (03.10.2019 Gazette 2019/40)**

(54) **INKJET INK COMPOSITION, MAINTENANCE METHOD, IMAGE RECORDING METHOD, AND IMAGE RECORED MATERIAL**

TINTENSTRAHLTINTENZUSAMMENSETZUNG, WARTUNGSVERFAHREN, BILDAUFZEICHNUNGSVERFAHREN UND BILDAUFZEICHNUNGSMATERIAL

COMPOSITION D'ENCRE POUR JET D'ENCRE, PROCÉDÉ D'ENTRETIEN, PROCÉDÉ D'ENREGISTREMENT D'IMAGE ET MATÉRIAU À IMAGE IMPRIMÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.03.2018 JP 2018069030**

(43) Date of publication of application:
**17.02.2021 Bulletin 2021/07**

(73) Proprietor: **FUJIFILM Corporation
Tokyo 106-8620 (JP)**

(72) Inventors:
• **KAWAI, Masaharu
Ashigarakami-gun, Kanagawa 258-8577 (JP)**

• **SHINOHARA, Ryuji
Ashigarakami-gun, Kanagawa 258-8577 (JP)**
• **TAMAKUNI, Fumiko
Ashigarakami-gun, Kanagawa 258-8577 (JP)**

(74) Representative: **Klunker IP
Patentanwälte PartG mbB
Destouchesstraße 68
80796 München (DE)**

(56) References cited:
EP-A1- 2 781 564     JP-A- 2008 229 909
JP-A- 2009 006 485     JP-A- 2015 067 802
JP-A- 2017 179 284     JP-A- 2018 131 581
US-A1- 2006 275 606     US-A1- 2015 184 010

EP 3 778 798 B1

**Description**

**BACKGROUND OF THE INVENTION**

1. Field of the Invention

The present disclosure relates to an inkjet ink composition, a maintenance method, an image recording method, and an image recorded material.

2. Description of the Related Art

A recording method carried out using an ink jet method has been widely used because high-quality images can be recorded on wide variety of base materials by allowing an ink composition to be jetted in the form of liquid droplets from a plurality of nozzles provided in an ink jet head.

As an inkjet ink composition used for an image recording method performed based on an ink jet method and the image recording method carried out using the inkjet ink composition, various forms of compositions and methods have been suggested.

For example, JP2014-095058A describes an ink for ink jet printing containing white pigment particles and hollow pigment particles having cavities inside.

JP2014-196590A discloses an image forming method of performing printing on a cloth with an ink composition containing at least one coloring material selected from hollow resin particles and metal compound particles, and a polyurethane resin having a glass transition temperature of 65°C or lower.

JP2014-210837A discloses an aqueous white ink for ink jet, containing at least titanium oxide, a pigment dispersion resin, an organic solvent, and water, in which a resin obtained by copolymerizing at least $\alpha$-olefin, maleic acid, and/or maleic acid anhydride is used as the pigment dispersion resin.

**SUMMARY OF THE INVENTION**

In the related art, it has been known that an image is recorded by allowing an inkjet ink composition containing inorganic pigment particles to be jetted by an ink jet head.

After the jetting of the inkjet ink composition, the ink remaining on the ink jet head after being jetted is wiped off for the purpose of avoiding clogging of a nozzle of the ink jet head.

However, since the above-described inorganic pigment particles are hard, particularly in a case where somewhat large inorganic pigment particles (for example, having a size of 100 nm or greater) are used, a liquid-repellent film, an underlying silicon substrate, a metal material, and the like on a surface of the ink jet head are damaged by the inorganic pigment particles in a case of wiping off the ink.

In the present disclosure, the property in which the inkjet ink composition is unlikely to be damaged is also referred to as having excellent "maintainability".

An object to be achieved by an aspect according to the present disclosure is to provide an inkjet ink composition having an excellent maintainability of a used ink jet head, a maintenance method in a case of using the inkjet ink composition, an image recording method carried out using the inkjet ink composition, and an image recorded material containing a solidified material of the inkjet ink composition.

Specific means for achieving the above-described objects includes the following aspects.

<1> An inkjet ink composition comprising: water; a dispersant; inorganic pigment particles having an average primary particle diameter of 100 nm or greater; and resin particles A having a glass transition temperature of 40°C or higher, in which X nm of an average primary particle diameter of the inorganic pigment particles and Y nm of a volume average particle diameter of the resin particles A satisfy an expression of $Y \geq 1.1 \times X$.

<2> The inkjet ink composition according to <1>, in which the average primary particle diameter of the inorganic pigment particles is in a range of 100 nm to 400 nm.

<3> The inkjet ink composition according to <1> or <2>, in which X and Y satisfy an expression of $Y \geq 1.3 \times X$.

<4> The inkjet ink composition according to any one of <1> to <3>, in which p% by volume of a volume content of the inorganic pigment particles with respect to an entire ink composition and r% by volume of a volume content of the resin particles A with respect to the entire ink composition satisfy an expression of $r \geq 0.2 \times p$.

<5> The inkjet ink composition according to any one of <1> to <4>, in which the glass transition temperature of the resin particles A is in a range of 80° to 200°C.

<6> The inkjet ink composition according to any one of <1> to <5>, in which P% by mass of a content of the inorganic pigment particles with respect to a total mass of the ink composition and R% by mass of a content of all the resin particles contained in the ink composition with respect to the total mass of the ink composition satisfy all Expressions A-1 to A-3.

$$\text{Expression A-1: } P^2 + R^2 \leq 300$$

$$\text{Expression A-2: } P \geq 5$$

$$\text{Expression A-3: } R \geq 1$$

<7> The inkjet ink composition according to any one of <1> to <5>, in which P% by mass of a content of the inorganic pigment particles with respect to a total mass of the ink composition, R% by mass of a content of all the resin particles contained in the ink composition with respect to the total mass of the ink composition, and a content D% by mass of the dispersant with respect to the total mass of the ink composition satisfy all Expressions C-1 to C-4.

$$\text{Expression C-1: } P^2 + (R + D)^2 \leq 350$$

$$\text{Expression C-2: } P \geq 5$$

$$\text{Expression C-3: } R \geq 1$$

$$\text{Expression C-4: } D \geq 0.1$$

<8> A maintenance method comprising: a step of wiping off the inkjet ink composition according to any one of <1> to <7> from an ink jet head used for jetting the inkjet ink composition.
<9> The maintenance method according to <8>, in which the ink jet head is an ink jet head including a liquid-repellent film, and the wiping step is a step of wiping off the inkjet ink composition from the liquid-repellent film.
<10> An image recording method comprising: a step of applying the inkjet ink composition according to any one of <1> to <7> onto a surface of a base material using an ink jet method.
<11> An image recorded material comprising: a base material; and a solidified material of the inkjet ink composition according to any one of <1> to <7>.

According to an aspect of the present disclosure, it is possible to provide an inkjet ink composition having an excellent maintainability of a used ink jet head, a maintenance method in a case of using the inkjet ink composition, an image recording method carried out using the inkjet ink composition, and an image recorded material containing a solidified material of the inkjet ink composition.

## BRIEF DESCRIPTION OF THE DRAWINGS

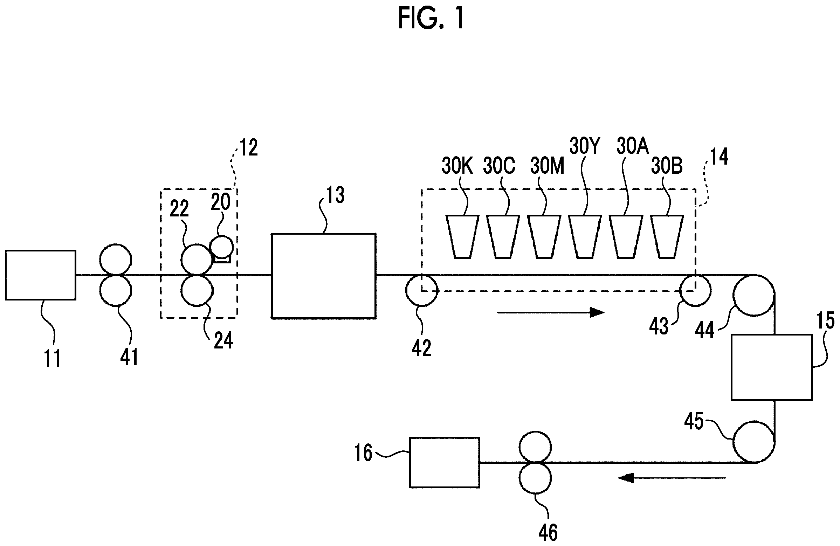

Fig. 1 is a schematic configuration view illustrating a configuration example of an ink jet recording device used for performing image recording.

## DESCRIPTION OF THE PREFERRED EMBODIMENTS

In the present disclosure, the numerical ranges shown using "to" indicate ranges including the numerical values described before and after "to" as the lower limits and the upper limits. In a numerical range described in a stepwise manner in the present disclosure, an upper limit or a lower limit described in a certain numerical range may be replaced with an upper limit or a lower limit in another numerical range described in a stepwise manner. Further, in a numerical range described in the present disclosure, an upper limit or a lower limit described in a certain numerical range may be replaced with a value described in an example.
In the present disclosure, in a case where a plurality of substances corresponding to respective components in a composition are present, the amount (the mass content and the volume content) of the respective components in the composition indicates the total amount of the plurality of substances present in the composition unless otherwise specified.

In the present disclosure, "recording an image" indicates that an image is drawn on a base material using an ink composition and a treatment liquid as necessary and the drawn image is fixed. The "image" may be an image recorded with ink and includes characters, solid films, and the like.

In the present disclosure, the meaning of the term "step" includes not only an independent step but also a step whose intended purpose is achieved even in a case where the step is not clearly distinguished from other steps.

In the present disclosure, "(meth)acryl" indicates at least one of acryl or methacryl, and "(meth)acrylate" indicates at least one of acrylate or methacrylate.

(Inkjet ink composition)

An inkjet ink composition according to the embodiment of the present disclosure (hereinafter, also simply referred to as an "ink composition") includes water, a dispersant, inorganic pigment particles having an average primary particle diameter of 100 nm or greater, and resin particles A having a glass transition temperature of 40°C or higher, in which X nm of an average primary particle diameter of the inorganic pigment particles and Y nm of a volume average particle diameter of the resin particles A satisfy an expression of $Y \geq 1.1 \times X$.

The ink composition according to the embodiment of the present disclosure has an excellent maintainability of the used ink jet head.

The reason why the above-described effects are obtained is not clear, but is assumed as follows. However, the ink composition according to the embodiment of the present disclosure is not limited to the following reason.

The ink composition according to the embodiment of the present disclosure contains inorganic pigment particles having an average primary particle diameter of 100 nm or greater (hereinafter, also referred to as specific pigment particles).

Therefore, it is normally considered that a liquid-repellent film, a silicon substrate, a metal material, and the like on a surface of the ink jet head are likely to be damaged by the inorganic pigment particles and the maintainability is reduced in a case of wiping off the ink composition on the ink jet head.

However, the ink composition according to the embodiment of the present disclosure further contains resin particles A having a glass transition temperature of 40°C or higher, and X nm of the average primary particle diameter of the inorganic pigment particles and Y nm of the volume average particle diameter of the resin particles A satisfy an expression of $y \geq 1.1 \times X$.

By allowing the ink composition to contain the resin particles A having a specific glass transition temperature and a specific volume average particle diameter, it is considered that the resin particles A having a specific hardness and a specific size function as a cushion between the pigment inorganic particles and various materials of the surface of the ink jet head in a case of wiping off the ink composition. As a result, it is considered that the damage to various materials on the surface of the ink jet head is likely to be suppressed and the maintainability is excellent.

In the ink compositions described in JP2014-095058A, JP2014-196590A, and JP2014-210837A, an ink composition containing inorganic pigment particles and resin particles is also described. However, the relationship between the average primary particle diameter of the inorganic pigment particles and the volume average particle diameter of the resin particles in the ink composition is neither described nor suggested. Further, in JP2014-095058A, JP2014-196590A, and JP2014-210837A, a technical idea of improving the maintainability by allowing the average primary particle diameter of the inorganic pigment particles and the volume average particle diameter of the resin particles to have a specific relationship is neither described nor suggested.

Hereinafter, the details of the ink composition according to the embodiment of the present disclosure will be described.

<Specific pigment particles>

The ink composition according to the embodiment of the present disclosure contains inorganic pigment particles (specific pigment particles) having an average primary particle diameter of 100 nm or greater. In a case where the average primary particle diameter thereof is 100 nm or greater, it is advantageous in terms of availability of the inorganic pigment particles.

[Average primary particle diameter]

From the viewpoints of the maintainability and the jetting stability, the average primary particle diameter (X nm described below) of the specific pigment particles is preferably in a range of 100 nm to 400 nm and more preferably in a range of 100 nm to 300 nm.

The average primary particle diameter of the specific pigment particles is a value measured using a transmission electron microscope (TEM). A transmission electron microscope 1200EX (manufactured by JEOL Ltd.) can be used for the measurement.

Specifically, the average particle diameter thereof is acquired by adding an ink composition diluted to 1000 times dropwise to Cu200 mesh (manufactured by JEOL Ltd.) to which a carbon film has been attached, drying the ink composition, measuring the equivalent circle diameters of 300 independent particles that do not overlap each other in the image enlarged at a magnification of 100000 times using a TEM, and averaging the measured values.

In the present disclosure, the "jetting stability" indicates a property in which a nozzle is unlikely to be clogged in a case of jetting an inkjet ink composition from the nozzle in an ink jet method.

[Inorganic pigment particles]

The inorganic pigment particles used as the specific pigment particles are not particularly limited, and known inorganic pigment particles are used.

Examples thereof include titanium oxide, zinc oxide, barium sulfate, calcium carbonate, aluminum hydroxide, iron oxide, cadmium red, barium yellow, chrome yellow, titanium yellow, cobalt blue, and titanium nitride.

In addition, any inorganic pigment can be used without particular limitation as long as the inorganic pigment has an average primary particle diameter of 100 nm or greater.

[Content]

The ink composition according to the present disclosure may contain only one kind of specific pigment particles or a combination of two or more kinds thereof.

From the viewpoints of color developability of an image to be obtained, the maintainability, and the jetting stability, the content (P% by mass described below) of the specific pigment particles is preferably in a range of 1% by mass to 20% by mass, more preferably in a range of 3% by mass to 15% by mass, and more preferably in a range of 5% by mass to 12% by mass with respect to the total mass of the ink composition.

Further, from the viewpoints of the color developability of an image to be obtained, the maintainability, and the jetting stability, the volume content (p% by volume described below) of the specific pigment particles at 25°C is preferably in a range of 0.25% by volume to 5% by volume, more preferably in a range of 0.75% by volume to 3.75% by volume, and still more preferably in a range of 1.25% by volume to 3% by volume with respect to the entire ink composition.

The volume content is measured by TGA (thermogravimetric analysis) and a bulk density measuring instrument in an environment of 25°C and a relative humidity of 50%.

Specifically, the mass content is measured by TGA, the specific gravity is measured by a bulk density measuring instrument, and the volume content is acquired as mass content/specific gravity.

<Other pigment particles>

The ink composition according to the embodiment of the present disclosure may further contain other pigment particles.

Examples of other pigment particles include organic pigment particles and inorganic pigment particles having an average primary particle diameter of less than 100 nm.

Examples of other pigment particles include organic pigment particles and inorganic pigment particles. Among the pigment particles described in paragraphs 0029 to 0041 of JP2011-094112A, pigment particles such as organic pigment particles or inorganic pigment particles having an average primary particle diameter of less than 100 nm are preferably used.

The content of other pigment particles contained in the ink composition is preferably in a range of 0% by mass to 5% by mass, more preferably in a range of 0% by mass to 3% by mass, and more preferably in a range of 0% by mass to 1% by mass with respect to the total mass of the ink composition according to the embodiment of the present disclosure.

Further, the volume content of other pigment particles at 25°C is preferably in a range of 0% by volume to 1.25% by volume, more preferably in a range of 0% by volume to 0.75% by volume, and still more preferably in a range of 0% to 0.25% by volume with respect to the entire ink composition.

<Resin particles A>

The ink composition according to the embodiment of the present disclosure contains resin particles A having a glass transition temperature (Tg) of 40°C or higher.

It is preferable that the resin particles A have a solid shape. In the present disclosure, the solid shape is a term used as an antonym of a hollow shape. Specifically, the void volume of the resin particles A is preferably less than 10% and more preferably 5% or less.

Further, in a case where the resin particles A have voids, the void volume thereof can be calculated by the following equation. In a case where the resin particles A do not have voids, the void volume thereof is 0%.

$$\text{Void volume (\%)} = (\text{radius of void of resin particle A/radius of resin particle A})^3 \times 100$$

In a case where the resin particles A have a plurality of voids instead of one, the void volume thereof is acquired by the following equation.

$$\text{Void volume (\%)} = \Sigma(\text{radius of void of resin particle A})^3/(\text{radius of resin particle A } (1/2 \text{ of particle diameter}))^3 \times 100$$

The radius of the resin particles A and the radius of the voids of the resin particles A are acquired by observing the resin particles with a transmission electron microscope. The arithmetic average value of the void volumes of 100 resin particles A is defined as the void volume of the resin particles A.

[Tg]

The glass transition temperature (Tg) of the resin particles A is 40°C or higher. In a case where the Tg is 40°C or higher, the maintainability is excellent.

From the viewpoint of the maintainability, the Tg is preferably 60°C or higher and more preferably 80°C or higher. The upper limit of Tg of the resin particles A is not particularly limited, but is preferably 300°C or lower, more preferably 200°C or lower, and still more preferably 180°C or lower from the viewpoint of the maintainability.

Among these, the Tg of the resin particles A is particularly preferably in a range of 80°C to 200°C from the viewpoint of the maintainability.

In the present disclosure, a measured Tg obtained by actual measurement is used as the glass transition temperature.

Specifically, the measured Tg indicates a value measured under typical measurement conditions using a differential scanning calorimeter (DSC) EXSTAR6220 (manufactured by Hitachi High-Tech Corporation). In a case where it is difficult to perform measurement due to decomposition or the like of the resin, a calculated Tg to be calculated by the following calculation formula is used. The calculated Tg indicates a value calculated by Formula (1).

$$1/\text{Tg} = \Sigma \,(\text{Xi/Tgi}) \cdots (1)$$

Here, it is assumed that the resin as a target for calculation is formed by copolymerizing n kinds of monomer components (i represents 1 to n). Xi represents a weight fraction ($\Sigma$Xi = 1) of the i-th monomer and Tgi represents a glass transition temperature (absolute temperature) of a homopolymer of the i-th monomer. Here, $\Sigma$ is obtained by summing 1 to n as i. Further, values in Polymer Handbook (3rd Edition) (written by J. Brandrup, E. H. Immergut (Wiley-Interscience, 1989)) are employed as the value (Tgi) of the glass transition temperature of the homopolymer of each monomer. The values of the glass transition temperatures of homopolymers of monomers, which are not described in the document, are obtained as the measured Tg by the above-described measuring method after the homopolymers of the monomers are prepared. Here, in a case where the weight-average molecular weight of the homopolymer is set to 10000 or greater, the influence of the weight-average molecular weight on the Tg of the polymer can be ignored.

The glass transition temperature of the resin particles A can be appropriately controlled by a commonly used method. For example, the glass transition temperature of the resin particles A can be controlled to be in a desired range by appropriately selecting the kind of monomer (polymerizable compound) constituting the resin particles A, the compositional ratio thereof, the molecular weight of the resin constituting the resin particles A, and the like.

[Resin]

Examples of the resin in the resin particles A include an acrylic resin, an epoxy resin, a polyether resin, a polyamide resin, a unsaturated polyester resin, a phenol resin, a silicone resin, a fluororesin, a polyvinyl resin (such as vinyl chloride, vinyl acetate, polyvinyl alcohol, or polyvinyl butyral), an alkyd resin, a polyester resin (such as a phthalic acid resin), and an amino material (such as a melamine resin, a melamine formaldehyde resin, an aminoalkyd co-condensation resin, a urea resin, or a urea resin).

Among the above-described resins, particles of an acrylic resin, a polyether resin, a polyester resin, or a polyolefin resin are preferable as the resin particles A. Further, from the viewpoint of improving the maintainability, particles of an acrylic resin are more preferable as the resin particles A.

Further, in the present specification, the acrylic resin indicates a resin having a structural unit derived from (meth)acrylic acid or a (meth)acrylate compound. The acrylic resin may have a structural unit other than the structural unit derived from the (meth)acrylic acid or the (meth)acrylate compound.

Further, the resin forming the resin particles A may be a copolymer having two or more kinds of structural units constituting the resins exemplified above or a mixture of two or more kinds of the resins. Further, the resin particles A may be formed of a mixture of two or more kinds of resins and may be composite resin particles obtained by laminating two or more kinds of resins, for example, a core and a shell.

As the resin particles A, resin particles A obtained by a phase-transfer emulsification method are preferable and particles of a self-dispersing resin (self-dispersing resin particles) are more preferable.

Examples of the self-dispersing resin particles include self-dispersing polymer particles described in paragraphs 0077 to 0094 of JP2016-193980A.

From the viewpoints of the maintainability and the jetting stability, the volume average particle diameter (Y nm described below) of the resin particles A is preferably in a range of 200 nm to 600 nm and more preferably in a range of 300 nm to 400 nm. Further, the particle size distribution of resin particles A is not particularly limited, and any of resin particles having a wide particle size distribution or resin particles having a monodispersed particle size distribution may be used.

The volume average particle diameter of the resin particles A is measured by a particle size distribution measuring device (for example, MICROTRAC UPA (registered trademark) EX150, manufactured by NIKKISO CO., LTD.) using light scattering is employed.

In the present disclosure, X nm of the average primary particle diameter of the inorganic pigment particles and Y nm of the volume average particle diameter of the resin particles A satisfy an expression of $Y \geq 1.1 \times X$. From the viewpoint of the maintainability, X nm of the average primary particle diameter and Y nm of the volume average particle diameter satisfy preferably an expression of $Y \geq 1.2y \times X$ and more preferably an expression of $Y \geq 1.3 \times X$.

Further, from the viewpoint of the jetting stability, X nm of the average primary particle diameter and Y nm of the volume average particle diameter satisfy preferably an expression of $Y \leq 2.5 \times X$ and more preferably an expression of $Y \leq 2.0 \times X$.

The resin particles A may be used alone or in combination of two or more kinds thereof.

The content of the resin particles A (preferably self-dispersing resin particles) in the ink composition (the total content in a case where two or more kinds of particles are present) is not particularly limited, but is preferably in a range of 0.3% by mass to 18% by mass, more preferably in a range of 1% by mass to 12% by mass, and still more preferably in a range of 3% by mass to 10% by mass with respect to the total mass of the ink composition, from the viewpoints of the maintainability and the jetting stability.

Further, the volume content of the resin particles A (r% by volume described below) is preferably in a range of 1% by volume to 15% by volume, more preferably in a range of 2% by volume to 12% by volume, and still more preferably in a range of 3% by volume to 10% by volume with respect to the entire ink composition according to the embodiment of the present disclosure.

The resin particles other than the resin particles A included in "all the resin particles contained in the ink composition" will be described below.

Hereinafter, specific examples of the resin particles A will be described, but the present disclosure is not limited thereto. Further, the values in the parentheses indicate the mass ratio of the copolymer components.

- Copolymer of methyl methacrylate/isobornyl methacrylate/methacrylic acid/sodium methacrylate (70/20/5/5), Tg: 150°C
- Methyl methacrylate/isobornyl methacrylate/ethylhexyl methacrylate/methacrylic acid (60/11/19/10), Tg: 90°C
- Joncryl (registered trademark) JDX-C3080 (manufactured by Johnson Polymers, Ltd.), Tg: 130°C.
- TREPEARL (registered trademark) EP, manufactured by Toray Industries, Inc., Tg: 190°C
- TREPEARL (registered trademark) PES, manufactured by Toray Industries, Inc., Tg: 225°C

<Other resin particles>

The ink composition according to the embodiment of the present disclosure may further contain other resin particles.

Examples of other resin particles include the same resin particles as the above-described resin particles A except that the Tg thereof is 40°C or lower or an expression of $Y \geq 1.1 \times X$ is not satisfied, or the Tg thereof is 40°C or lower and an expression of $Y \geq 1.1 \times X$ is not satisfied. For example, in the acrylic resin particles of the resin particles A, resin particles having a volume average particle diameter of 1 nm to 100 nm are exemplified.

Further, it is more preferable that the ink composition according to the embodiment of the present disclosure further contains resin particles having a volume average particle diameter of 1 nm to 50 nm as the resin particles that do not satisfy an expression of $Y \geq 1.1 \times X$.

In a case where the ink composition according to the embodiment of the present disclosure further contains other resin particles having a volume average particle diameter of 1 nm to 50 nm, the rub resistance of an image to be obtained is improved.

In the present disclosure, the resin particles A and other resin particles are collectively referred to as "all the resin particles contained in the ink composition".

From the viewpoint of the maintainability, the content (R% by mass described below) of all the resin particles contained in the ink composition is preferably 1% by mass or greater, more preferably 3% by mass or greater, and still more preferably 5% by mass or greater with respect to the total mass of the ink composition according to the embodiment of the present disclosure.

Further, from the viewpoint of the jetting stability, the content thereof is preferably 15% by mass or less and more preferably 12% by mass or less.

<Dispersant>

The ink composition may contain a dispersant for dispersing the pigment (any or both the specific pigment particles and other pigment particles described above). As the dispersant, any of a polymer dispersant or a low-molecular-weight surfactant-type dispersant may be used. Further, as the polymer dispersant, any of a water-soluble dispersant or a water-insoluble dispersant may be used.

Preferred examples of the dispersant include dispersants described in paragraphs 0080 to 0096 of JP2016-145312A.

The content of the dispersant is preferably in a range of 3% by mass to 20% by mass, more preferably in a range of 4% by mass to 18% by mass, and still more preferably in a range of 5% by mass to 15% by mass with respect to the content of all the pigment particles.

Further, the content of the dispersant (D% by mass described below) is preferably in a range of 0.1% by mass to 2.4% by mass, more preferably in a range of 0.5% by mass to 2.0% by mass, and still more preferably in a range of 0.8% by mass to 1.5% by mass with respect to the total mass of the ink composition.

<Water>

The ink composition contains water.

The content of water is preferably in a range of 50% by mass to 90% by mass and more preferably in a range of 60% by mass to 80% by mass with respect to the total mass of the ink composition.

<Water-soluble solvent>

It is preferable that the ink composition contains at least one water-soluble solvent.

In this manner, the effect of suppressing drying of the ink composition or the effect of wetting the ink composition can be obtained.

The water-soluble solvent which may be contained in the ink composition can be used, for example, as an anti-drying agent that prevents clogging due to aggregates formed by the ink composition being attached to an ink jet port of an injection nozzle and being dried.

From the viewpoints of suppressing drying and performing wetting, as the water-soluble solvent contained in the ink composition, a water-soluble solvent having a lower vapor pressure than that of water is preferable.

In addition, the boiling point of the water-soluble solvent at 1 atm (1013.25 hPa) is preferably in a range of 80°C to 300°C and more preferably in a range of 120°C to 250°C.

As the anti-drying agent, a water-soluble solvent which has a lower vapor pressure than that of water is preferable.

Specific examples of such a water-soluble solvent include polyhydric alcohols represented by ethylene glycol, propylene glycol, diethylene glycol, polyethylene glycol, thiodiglycol, dithiodiglycol, 2-methyl-1,3-propanediol, 1,2,6-hexanetriol, an acetylene glycol derivative, glycerin, and trimethylolpropane.

Among these, polyhydric alcohol such as glycerin or diethylene glycol is preferable as the anti-drying agent.

The anti-drying agent may be used alone or in combination of two or more kinds thereof. The content of the anti-drying agent is preferably in a range of 10% by mass to 50% by mass with respect to the total mass of the ink composition.

The water-soluble solvent may be used for adjusting the viscosity of the ink composition in addition to the purse of use described above.

Specific examples of the water-soluble solvent which can be used for adjusting the viscosity include alcohols (such as methanol, ethanol, propanol, isopropanol, butanol, isobutanol, sec-butanol, t-butanol, pentanol, hexanol, cyclohexanol, and benzyl alcohol), polyhydric alcohols (such as ethylene glycol, diethylene glycol, triethylene glycol, polyethylene glycol, propylene glycol, dipropylene glycol, polypropylene glycol, butylene glycol, hexanediol, pentanediol, glycerin, hexanetriol, and thiodiglycol), glycol derivatives (such as ethylene glycol monomethyl ether, ethylene glycol monoethyl ether, ethylene glycol monobutyl ether, diethylene glycol monomethyl ether, diethylene glycol monobutyl ether, diethylene glycol monobutyl ether, propylene glycol monomethyl ether, propylene glycol monobutyl ether, dipropylene glycol monomethyl ether, triethylene glycol monomethyl ether, ethylene glycol diacetate, ethylene glycol monomethyl ether acetate, triethylene glycol monomethyl ether, triethylene glycol monoethyl ether, and ethylene glycol monophenyl ether), amines (such as ethanolamine, diethanolamine, triethanolamine, N-methyldiethanolamine, N-ethyldiethanolamine, morpholine, N-ethylmorpholine, ethylenediamine, diethylenetriamine, triethylenetetramine, polyethyleneimine, and tetramethylpropylenediamine), and other polar solvents (such as formamide, N,N-dimethylformamide, N,N-dimethylacetamide, dimethyl sulfoxide, sulfolane, 2-pyrrolidone, N-methyl-2-pyrrolidone, N-vinyl-2-pyrrolidone, 2-oxazolidone, 1,3-dimethyl-2-imidazolidinone, acetonitrile, and acetone).

In this case, the water-soluble solvent may also be used alone or in combination of two or more kinds thereof.

(Other additives)

The ink composition may contain components other than the components described above.

Examples of other components include known additives such as a fading inhibitor, an emulsion stabilizer, a penetration enhancer, an ultraviolet absorbing agent, a preservative, an antibacterial agent, a pH adjuster, a surface tension adjuster, an antifoaming agent, a viscosity adjuster, a dispersion stabilizer, a rust inhibitor, and a chelating agent.

<Relationship of content of each component>

From the viewpoint of achieving both the maintainability and the jetting stability of the used ink jet head, p% by volume of the volume content of the specific pigment particles with respect to the entire ink composition and r% by volume of the volume content of the resin particles A with respect to the entire ink composition satisfy preferably an expression of $r \geq 0.2 \times p$ and more preferably an expression of $r \geq 0.3 \times p$.

Further, p% by volume of the volume content and r% by volume of the volume content satisfy preferably an expression of $12 \times p \geq r$ and more preferably an expression of $6 \times p \geq r$.

Further, from the viewpoints of improving the maintainability of the used ink jet head and achieving both the maintainability and the jetting stability, P% by mass of the content of the inorganic pigment particles with respect to the total mass of the ink composition and R% by mass of the content of all the resin particles contained in the ink composition with respect to the total mass of the ink composition satisfy preferably all Expressions A-1 to A-3 and more preferably all Expressions B-1 to B-3.

$$\text{Expression A-1: } P^2 + R^2 \leq 300$$

$$\text{Expression A-2: } P \geq 5$$

$$\text{Expression A-3: } R \geq 1$$

$$\text{Expression B-1: } P^2 + R^2 \leq 300$$

$$\text{Expression B-2: } 12 \geq P \geq 5$$

$$\text{Expression B-3: } 12 \geq R \geq 1$$

Further, from the viewpoint of achieving both the maintainability and the jetting stability of the used ink jet head, P% by mass of the content of the inorganic pigment particles with respect to the total mass of the ink composition, R% by mass of the content of all the resin particles contained in the ink composition with respect to the total mass of the ink composition, and D% by mass of a content of the dispersant with respect to the total mass of the ink composition satisfy preferably all Expressions C-1 to C-4 and more preferably all Expressions D-1 to D-4.

$$\text{Expression C-1: } P^2 + (R + D)^2 \leq 350$$

$$\text{Expression C-2: } P \geq 5$$

$$\text{Expression C-3: } R \geq 1$$

$$\text{Expression C-4: } D \geq 0.1$$

$$\text{Expression D-1: } P^2 + (R + D)^2 \leq 350$$

$$\text{Expression D-2: } 12 \geq P \geq 5$$

$$\text{Expression D-3: } 12 \geq R \geq 1$$

$$\text{Expression D-4: } 2.4 \geq D \geq 0.1$$

<Physical properties of ink composition>

The pH of the ink composition according to the embodiment of the present disclosure is preferably in a range of 4 to 10 and more preferably in a range of 5 to 9.
In the present disclosure, the pH is measured using a pH meter in an environment of a temperature of 23°C and a relative humidity of 55% RH unless otherwise specified.
The viscosity of the ink composition according to the embodiment of the present disclosure is preferably in a range of 1 mPa·s to 30 mPa·s and more preferably in a range of 1.5 mPa·s to 20 mPa·s.
In the present disclosure, the viscosity is measured under conditions of a measurement temperature of 23°C and a shear rate of 1,400 s⁻¹ using a TV-20 type viscometer (manufactured by Toki Sangyo Co., Ltd.) as a measuring device, unless otherwise specified.
The surface tension of the ink composition according to the embodiment of the present disclosure is preferably in a range of 20 mN/m to 60 mN/m, more preferably in a range of 20 mN/m to 45 mN/m, and still more preferably in a range of 25 mN/m to 40 mN/m.
In the present disclosure, the surface tension thereof is measured under a temperature condition of 25°C using an Automatic Surface Tensiometer CBVP-Z (manufactured by Kyowa Interface Science Co., Ltd.) according to a plate method.

(Maintenance method)

The maintenance method according to the embodiment of the present disclosure includes a step of wiping off the inkjet ink composition from the ink jet head used for jetting the inkjet ink composition.

Further, in the maintenance method according to the embodiment of the present disclosure, it is preferable that the ink jet head is an ink jet head including a liquid-repellent film, and the wiping step is a step of wiping off the ink composition from the liquid-repellent film.

The liquid-repellent film is a film that repels the ink composition formed on the surface of a peripheral portion of a nozzle of the ink jet head. The details of the liquid-repellent film will be described in the description of the ink jet head in the image recording method described below.

<Maintenance step>

In the maintenance step, the inkjet ink composition according to the present disclosure attached to the liquid-repellent film is wiped off.

The ink jet head in the maintenance method according to the present disclosure and the method of jetting the ink composition from the ink jet head will be described below.

The method of wiping off the ink composition is not particularly limited, and examples thereof include a method of wiping off an ink from a nozzle surface after applying a known maintenance liquid to the nozzle surface of a recording head of an ink jet recording device and a method of wiping off an ink from a nozzle surface and then applying a known a maintenance liquid to the nozzle surface.

Since the ink composition according to the embodiment of the present disclosure contains the specific resin particles A, it is considered that the damage to the material of the surface of the ink jet head is likely to be suppressed particularly in a case where a method of wiping off the ink composition from the ink jet head is used.

Further, the method of wiping off the ink composition is not particularly limited, and examples thereof include wiping the ink composition with a blade and wiping the ink composition with a cloth, paper, or the like. Preferred examples of the methods include a method of scraping the ink composition by rubbing (wiping) the nozzle surface with a wiper blade after the application of the maintenance liquid and a method of wiping off the ink composition with a cloth, paper, or the like. Among these, the method of wiping off the ink composition with a cloth, paper, or the like is particularly preferable.

The method of wiping off these ink compositions may be performed by using maintenance means such as known cleaning means.

Further, in the method of wiping off the ink composition with a cloth, paper, or the like, it is also possible to directly apply the maintenance liquid to the cloth, paper, or the like and wipe the head surface in a wet state. The above-described method has an advantage in that the amount of the used maintenance liquid is small.

The maintenance liquid can be applied by, for example, being jetted using an ink jet method, performing coating using a roller, or performing spraying, but it is preferable that the maintenance liquid is applied according to a method of forming a maintenance liquid column on a maintenance liquid (washing liquid) coating unit based on a water head difference described in JP2011-073295A, JP2011-073339A, and the like and forming a liquid film between a head and the maintenance liquid coating unit in a case of allowing an ink jet recording head to pass through the maintenance liquid column.

The maintenance liquid is not particularly limited, and known maintenance liquids can be used, and examples thereof include washing liquids described in JP2011-073295A and JP2011-073339A and maintenance liquids described in JP2011-063777A, JP2009-012361A, JP2008-274016A, and the like.

(Image recording method)

Hereinafter, an example of the image recording method according to the embodiment of the present disclosure will be described.

It is preferable that the image recording method according to the embodiment of the present disclosure includes a step of applying the ink composition according to the embodiment of the present disclosure onto the surface of the base material using an ink jet method.

The image recording method according to the embodiment of the present disclosure may include other steps as necessary.

In the image recording method according to the embodiment of the present disclosure, the jetting stability of the ink composition in the ink jet method is excellent and the maintainability is excellent. The reason why the effects of the jetting stability and the maintainability are obtained is as described above.

It is preferable that the maintenance method according to the present disclosure is performed after the image is recorded by the image recording method according to the embodiment of the present disclosure.

Hereinafter, each step in an example of the image recording method according to the embodiment of the present disclosure will be described.

<Ink applying step>

The step of applying the ink composition onto the surface of the base material (also referred to as the "ink applying step") is a step of applying the ink composition according to the embodiment of the present disclosure onto the surface of the base material using an ink jet method.

The ink composition may be applied on the surface of the base material so as to come into contact with the base material, may be applied to come into contact with at least a part of a region on the surface of the base material, to which the treatment liquid described below has been applied, or may be applied to come into contact with at least a part of a region, to which another ink composition recorded on the surface of the base material has been applied, and the region to which the ink composition is applied is not particularly limited as long as the region is on the surface of the base material.

The ink composition can be selectively applied onto the surface of the base material by performing the above-described step. In this manner, a desired image (specifically, a visible image) can be recorded.

In the ink applying step, only one kind of the ink composition according to the embodiment of the present disclosure or two or more kinds of the ink compositions according to the embodiment of the present disclosure may be applied.

As a method of applying the ink composition in the ink applying step, a known ink jet method can be applied.

The method of jetting the ink composition in the ink jet method is not particularly limited, and any of known methods such as an electric charge control method of jetting an ink composition using an electrostatic attraction force; a drop-on-demand method (pressure pulse method) using a vibration pressure of a piezoelectric element; an acoustic ink jet method of jetting an ink composition using a radiation pressure by converting an electric signal into an acoustic beam and irradiating the ink composition with the acoustic beam; and a thermal ink jet (bubble jet (registered trademark)) method of heating an ink composition to form bubbles and utilizing the generated pressure may be used.

As the ink jet method, particularly, an ink jet method described in JP1979-059936A (JP-S54-059936A) in which an ink composition is jetted from a nozzle using an action force caused by a rapid change in volume of the ink composition after being subjected to an action of thermal energy can be effectively used.

Further, the method described in paragraphs 0093 to 0105 of JP2003-306623A can also be employed as the ink jet method.

The application of the ink composition according to the ink jet method is performed by allying the ink composition to be jetted from a nozzle of an ink jet head.

Examples of the system of the ink jet head include a shuttle system of performing recording while scanning a short serial head in the width direction of the base material and a line system of using a line head in which recording elements are aligned in correspondence with the entire area of one side of the base material.

In the line system, image recording can be performed on the entire surface of the base material by scanning the base material in a direction intersecting the direction in which the recording elements are aligned. In the line system, a transport system such as a carriage that scans a short head in the shuttle system is not necessary. Further, in the line system, since the movement of a carriage and complicated scanning control between the head and the base material are not necessary as compared with the shuttle system, only the base material moves. Therefore, according to the line system, image recording at a higher speed than that of the shuttle system can be realized.

From the viewpoint of obtaining a high-definition image, the liquid droplet amount of the ink composition jetted from the nozzle of the ink jet head is preferably in a range of 1 pL (pico liter) to 10 pL and more preferably in a range of 1.5 pL to 6 pL.

In addition, from the viewpoints of improving the image irregularity and improving connection of continuous gradations, it is also effective that the ink is jetted by combining different amounts of liquid droplets.

It is preferable that the ink jet head comprises a liquid-repellent film on the surface to which the ink is jetted (ink jetted surface).

As the ink jet head, an ink jet head comprising a nozzle plate having a liquid-repellent film that is provided on a jet hole forming surface (ink jetted surface) in which a plurality of jet holes are two-dimensionally arranged is preferable.

As such a nozzle plate and an ink jet head, the nozzle plate described in paragraphs 0206 to 0214 and Figs. 3 and 4 of JP2013-223958A can be used.

Further, a liquid-repellent film containing a fluorine compound is preferable as the liquid-repellent film.

As the fluorine compound, a compound containing a fluorinated alkyl group is preferable.

Examples of the liquid-repellent film containing a fluorine compound include the liquid-repellent film described in paragraphs 0192 to 0205 of JP2013-223958A.

As the liquid-repellent film, a liquid-repellent film formed by using a fluorinated alkylsilane compound (preferably by a chemical vapor deposition method) is particularly preferable.

As the fluorinated alkylsilane compound, a fluorinated alkylsilane compound represented by Formula (F) can be suitably used. The fluorinated alkylsilane compound represented by Formula (F) is a silane coupling compound.

$$C_nF_{2n+1}-C_mH_{2m}-Si-X_3 \text{ ... Formula} \qquad (F)$$

In Formula (F), n represents an integer of 1 or greater, and m represents an integer of 0 or 1 or greater. X represents an alkoxy group, an amino group, or a halogen atom. Further, a part of X may be substituted with an alkyl group.

Examples of the fluorinated alkylsilane compound represented by Formula (F) include fluoroalkyltrichlorosilane such as $C_8F_{17}C_2H_4SiCl_3$ (also referred to as "1H,1H,2H,2H-perfluorodecyltrichlorosilane" or "FDTS") or $CF_3(CF_2)_8C_2H_4SiCl_3$; and fluoroalkylalkoxysilane such as $CF_3(CF_2)_8C_2H_4Si(OCH_3)_3$, 3,3,3-trifluoropropyltrimethoxysilane, tridecafluoro-1,1,2,2-tetrahydrooctyltrimethoxysilane, or heptadecafluoro-1,1,2,2-tetrahydrodecyltrimethoxysilane.

As the fluorinated alkylsilane compound represented by Formula (F), from the viewpoints of the liquid repellency and the durability of the liquid-repellent film, a compound in which n represents an integer of 1 to 14, m represents an integer of 0 or 1 to 5, and X represents an alkoxy group or a halogen atom is preferable, and a compound in which n represents an integer of 1 to 12, m represents an integer of 0 to 3, and X represents an alkoxy group or a halogen atom is more preferable.

As the fluorinated alkylsilane compound represented by Formula (F), $C_8F_{17}C_2H_4SiCl_3$ is most preferable.

The thickness of the liquid-repellent film is not particularly limited, but is preferably in a range of 0.2 nm to 30 nm and more preferably in a range of 0.4 nm to 20 nm. The thickness of the liquid-repellent film is not particularly problematic in a case where the thickness thereof is greater than 30 nm, but it is advantageous that the thickness thereof is 30 nm or less in terms of film uniformity. Further, the liquid repellency is satisfactory in a case where the thickness thereof is 0.2 nm or greater.

As the liquid-repellent film containing a fluorine compound, for example, a monomolecular film of a fluorinated alkylsilane compound (SAM (Self-Assembled Monolayer) film) or a laminated film of a fluorinated alkylsilane compound is preferable.

Here, the laminated film of the fluorinated alkylsilane compound includes not only a film in which the fluorinated alkylsilane compound is stacked without being polymerized, but also a polymerized film of the fluorinated alkylsilane compound. As the liquid-repellent film containing a fluorine compound, a monomolecular film (SAM film) of a fluorinated alkylsilane compound is particularly preferable.

In the ink applying step, the applied ink composition may be heated and dried.

Examples of the means for heating and drying the ink include known heating means such as a heater, known air blowing means such as a dryer, and means for combining these.

Examples of the method for heating and drying the ink composition include a method of applying heat using a heater or the like from a side of the base material opposite to the surface to which the ink composition has been applied; a method of applying warm air or hot air to the surface of the base material to which the ink has been applied; a method of applying heat using an infrared heater from the surface of the base material to which the ink composition has been applied or from a side of the base material opposite to the surface to which the ink composition has been applied; and a method of combining a plurality of these methods.

The heating temperature of heating and drying the ink composition is preferably 55°C or higher, more preferably 60°C or higher, and particularly preferably 65°C or higher.

The upper limit of the heating temperature is not particularly limited, and the upper limit thereof is preferably 100°C and more preferably 90°C or higher.

The time of heating and drying the ink composition is not particularly limited, but is preferably in a range of 3 seconds to 60 seconds, more preferably in a range of 5 seconds to 60 seconds, and particularly preferably in a range of 10 seconds to 45 seconds.

Further, in the ink applying step, the base material (or the base material to which the treatment liquid has been applied in the treatment liquid adding step described below) may be heated before the application of the ink composition.

The heating temperature may be appropriately set according to the kind of the base material, the composition of the ink composition, and the like, but the temperature of the base material is set to be preferably in a range of 20°C to 50°C and more preferably in a range of 25°C to 40°C.

In the step of adding the treatment liquid described below, in a case where the treatment liquid is heated and dried, the heating for heating and drying the treatment liquid may also serve as the heating of the base material before the application of the ink composition.

[Base material]

The base material used in the image recording method according to the embodiment of the present disclosure is not particularly limited, and examples thereof include paper, coated paper, a resin base material, a metal, a ceramic, glass, and a textile base material.

In the image recording method according to the embodiment of the present disclosure, it is also preferable to use an impermeable base material.

In a case where an impermeable base material is used in the image recording method according to the embodiment of the present disclosure, it is preferable that the image recording method according to the embodiment of the present disclosure further includes a treatment liquid adding step described below.

In the present disclosure, the "impermeable base material" indicates a base material that absorbs less water or does not absorb water. Specifically, the "impermeable base material" indicates a base material having a water absorption amount of $0.3 \text{ g/m}^2$ or less.

The water absorption amount $(\text{g/m}^2)$ of the base material is measured as follows.

Water is brought into contact with a region having a size of 100 mm $\times$ 100 mm in the front surface of the base material (that is, the surface to which an image is recorded), and the state is maintained at 25°C for 1 minute. The mass (absorption amount (g)) of water absorbed by maintaining the state for 1 minute is acquired, and the obtained absorption amount (g) is converted to the absorption amount per unit area $(\text{g/m}^2)$.

The impermeable base material is not particularly limited, but a resin base material is preferable.

The resin base material is not particularly limited, and examples thereof include a base material formed of a thermoplastic resin.

A base material obtained by molding a thermoplastic resin in the form of a sheet is exemplified as the resin base material.

It is preferable that the resin base material contains polypropylene, polyethylene terephthalate, nylon, polyethylene, or polyimide.

The resin base material may be a transparent resin base material or a colored resin base material, and at least a part thereof may be subjected to a metal vapor deposition treatment or the like.

In the present disclosure, the term "transparent" indicates that the minimum transmittance at a wavelength of 400 nm to 700 nm at 23°C is 80% or greater (preferably 90% or greater and more preferably 95% or greater). The minimum transmittance is measured in every 1 nm using a spectrophotometer (for example, spectrophotometer UV-2100, manufactured by Shimadzu Corporation).

The shape of the resin base material is not particularly limited, but a sheet-shaped resin base material is preferable. From the viewpoint of the productivity of the image recorded material, a sheet-shaped resin base material which is capable of forming a roll by being wound is more preferable.

The thickness of the resin base material is preferably in a range of 10 $\mu$m to 200 $\mu$m and more preferably in a range of 10 $\mu$m to 100 $\mu$m.

<Treatment liquid adding step>

The image recording method according to the embodiment of the present disclosure further includes a step of adding a treatment liquid containing an aggregating agent onto the surface of the base material before the step of applying the ink composition onto the surface of the base material (also referred to as the "treatment liquid adding step"), and it is preferable that the step of applying the ink composition onto the surface of the base material is a step of applying the ink composition to at least a part of a region on the surface of the base material, to which the treatment liquid has been applied, using the ink jet method.

Further, the ink applying step is the same as the step of applying the ink composition onto the surface of the base material except that the application of the ink composition is performed on at least a part of the region on the surface of the base material, to which the treatment liquid has been applied, and the preferred embodiments thereof are the same as described above.

The application of the treatment liquid onto the impermeable base material can be performed by employing a known method such as a coating method, an ink jet method, or an immersion method.

Examples of the coating method include known coating methods using a bar coater (such as a wire bar coater), an extrusion die coater, an air doctor coater, a blade coater, a rod coater, a knife coater, a squeeze coater, a reserve roll coater, a gravure coater, or a flexo coater.

The details of the ink jet method are the same as the details of the ink jet method which can be applied to the ink applying step described above.

The mass $(\text{g/m}^2)$ of the treatment liquid to be applied per unit area is not particularly limited as long as the components in the ink composition can be aggregated, but is preferably in a range of $0.1 \text{ g/m}^2$ to $10 \text{ g/m}^2$, more preferably in a range of $0.5 \text{ g/m}^2$ to $6.0 \text{ g/m}^2$, and still more preferably in a range of $1.0 \text{ g/m}^2$ to $4.0 \text{ g/m}^2$.

The amount of the aggregating agent applied to the base material is preferably in a range of $0.3 \text{ mmol/m}^2$ to $2.2 \text{ mmol/m}^2$, more preferably in a range of $0.5 \text{ mmol/m}^2$ to $2.0 \text{ mmol/m}^2$, and still more preferably in a range of $0.8 \text{ mmol/m}^2$ to $1.8 \text{ mmol/m}^2$.

Further, the base material may be heated before the application of the treatment liquid in the treatment liquid adding step.

The heating temperature may be appropriately set according to the kind of the base material or the composition of the treatment liquid, but the temperature of the impermeable base material is set to be preferably in a range of 20°C to 50°C and more preferably in a range of 25°C to 40°C.

In the treatment liquid adding step, the treatment liquid may be heated and dried after the application of the treatment liquid and before the ink applying step described above.

Examples of the means for heating and drying the treatment liquid include known heating means such as a heater, known air blowing means such as a dryer, and means for combining these.

Examples of the method of heating and drying the treatment liquid include a method of applying heat using a heater or the like from a side of the base material opposite to the surface to which the treatment liquid has been applied; a method of applying warm air or hot air to the surface of the base material to which the treatment liquid has been applied; a method of applying heat using an infrared heater from the surface of the base material to which the treatment liquid has been applied or from a side of the base material opposite to the surface to which the treatment liquid has been applied; and a method of combining a plurality of these methods.

The heating temperature of heating and drying the treatment liquid is preferably 35°C or higher and more preferably 40°C or higher.

The upper limit of the heating temperature is not particularly limited, and the upper limit thereof is preferably 100°C, more preferably 90°C, and still more preferably 70°C.

The time of heating and drying the treatment liquid is not particularly limited, but is preferably in a range of 0.5 seconds to 60 seconds, more preferably in a range of 0.5 seconds to 20 seconds, and particularly preferably in a range of 0.5 seconds to 10 seconds.

Hereinafter, the details of the treatment liquid used in the image recording method according to the embodiment of the present disclosure will be described.

[Treatment liquid]

- Aggregating agent -

The treatment liquid further contains at least one aggregating agent selected from the group consisting of a polyvalent metal compound, an organic acid, a metal complex, and a water-soluble cationic polymer.

Among these, it is preferable that the treatment liquid contains an organic acid.

In a case where the treatment liquid contains an aggregating agent, the rub resistance of an image to be recorded is further improved. Specifically, in a case where an image is recorded by applying the treatment liquid and the ink composition in this order to the impermeable base material, the aggregating agent exerts a function of aggregating components in the ink composition on the surface of the impermeable base material. In this manner, the rub resistance of the image is improved.

«Polyvalent metal compound»

Examples of the polyvalent metal compound include alkaline earth metals of a group 2 (such as magnesium and calcium) in the periodic table, transition metals of a group 3 (such as lanthanum) in the periodic table, cations of a group 1 3 (such as aluminum) in the periodic table, and salts of lanthanides (such as neodymium).

As salts of these metals, salts of organic acids, a nitrate, a chloride, and a thiocyanate described below are suitable.

Among these, a calcium salt or magnesium salt of an organic acid (such as formic acid, acetic acid, or a benzoate), a calcium salt or magnesium salt of nitric acid, calcium chloride, magnesium chloride, and a calcium salt or magnesium salt of thiocyanic acid are preferable.

Further, it is preferable that at least a part of the polyvalent metal compound is dissociated into polyvalent metal ions and counter ions in the treatment liquid.

<<Organic acid>>

As the organic acid, an organic compound containing an acidic group is exemplified.

Examples of the acidic group include a phosphoric acid group, a phosphonic acid group, a phosphinic acid group, a sulfuric acid group, a sulfonic acid group, a sulfinic acid group, and a carboxy group.

From the viewpoint of the aggregation rate of the ink composition, a phosphoric acid group or a carboxy group is preferable, and a carboxy group is more preferable as the acidic group.

Further, it is preferable that at least a part of the acidic group is dissociated in the treatment liquid.

Preferred examples of the organic compound containing a carboxy group include polyacrylic acid, acetic acid, formic acid, benzoic acid, glycolic acid, malonic acid, malic acid (preferably DL-malic acid), maleic acid, succinic acid, glutaric acid, fumaric acid, citric acid, tartaric acid, phthalic acid, 4-methylphthalic acid, lactic acid, pyrrolidone carboxylic acid, pyrrone carboxylic acid, pyrrole carboxylic acid, furan carboxylic acid, pyridine carboxylic acid, coumarinic acid, thiophene carboxylic acid, and nicotinic acid. These compounds may be used alone or in combination of two or more kinds thereof.

From the viewpoint of the aggregation rate of the ink composition, as the organic compound containing a carboxy group, di- or higher valent carboxylic acid (hereinafter, also referred to as polyvalent carboxylic acid) is preferable, and dicarboxylic acid is more preferable.

As the dicarboxylic acid, malonic acid, malic acid, maleic acid, succinic acid, glutaric acid, fumaric acid, tartaric acid, 4-methylphthalic acid, or citric acid is preferable, and malonic acid, malic acid, tartaric acid, or citric acid is more preferable.

It is preferable that the organic acid has a low pKa (for example, 1.0 to 5.0).

In this manner, the surface charge of particles such as polymer particles or the pigment stably dispersed in the ink composition by a weakly acidic functional group such as a carboxy group is reduced by bringing the ink composition into contact with an organic acidic compound having a lower pKa to degrade the dispersion stability.

It is preferable that the organic acid has a low pKa and a high solubility in water and is di- or higher valent and more preferable that the organic acid is a di- or trivalent acidic substance which has a high buffer capacity in a pH region whose pKa is lower than the pKa of the functional group (for example, a carboxy group) that allows the particles to be stably dispersed in the ink.

<<Metal complex>>

As the metal complex, a metal complex including at least one selected from the group consisting of zirconium, aluminum, and titanium as a metal element is preferable.

As the metal complex, a metal complex including at least one selected from the group consisting of acetate, acetylacetonate, methylacetoacetate, ethylacetoacetate, octylene glycolate, butoxyacetylacetonate, lactate, lactate ammonium salt, and triethanol aminate as a ligand is preferable.

As the metal complex, various metal complexes are commercially available, and a commercially available metal complex may be used in the present disclosure. Further, various organic ligands, particularly various multidentate ligands that are capable of forming metal chelate catalysts are commercially available. Accordingly, a metal complex prepared by combining a commercially available organic ligand with a metal may be used.

Examples of the metal complex include zirconium tetraacetyl acetonate (for example, "ORGATIX ZC-150", manufactured by Matsumoto Fine Chemical Co., Ltd.), zirconium monoacetyl acetonate (for example, "ORGATIX ZC-540", manufactured by Matsumoto Fine Chemical Co., Ltd.), zirconium bisacetyl acetonate (for example, "ORGATIX ZC-550", manufactured by Matsumoto Fine Chemical Co., Ltd.), zirconium monoethyl acetoacetate (for example, "ORGATIX ZC-560", manufactured by Matsumoto Fine Chemical Co., Ltd.), zirconium acetate (for example, "ORGATIX ZC-115", manufactured by Matsumoto Fine Chemical Co., Ltd.), titanium diisopropoxy bis(acetylacetonate) (for example, "ORGATIX TC-100", manufactured by Matsumoto Fine Chemical Co., Ltd.), titanium tetraacetyl acetonate (for example, "ORGATIX TC-401", manufactured by Matsumoto Fine Chemical Co., Ltd.), titanium dioctyloxy bis(octylene glycolate) (for example, "ORGATIX TC-200", manufactured by Matsumoto Fine Chemical Co., Ltd.), titanium diisopropoxy bis(ethylacetoacetate) (for example, "ORGATIX TC-750", manufactured by Matsumoto Fine Chemical Co., Ltd.), zirconium tetraacetyl acetonate (for example, "ORGATIX ZC-700", manufactured by Matsumoto Fine Chemical Co., Ltd.), zirconium tributoxy monoacetyl acetonate (for example, "ORGATIX ZC-540", manufactured by Matsumoto Fine Chemical Co., Ltd.), zirconium monobutoxy acetyl acetonate bis(ethylacetoacetate) (for example, "ORGATIX ZC-570", manufactured by Matsumoto Fine Chemical Co., Ltd.), zirconium dibutoxy bis(ethylacetoacetate) (for example, "ORGATIX ZC-580", manufactured by Matsumoto Fine Chemical Co., Ltd.), aluminum trisacetyl acetonate (for example, "ORGATIX AL-80", manufactured by Matsumoto Fine Chemical Co., Ltd.), titanium lactate ammonium salt (for example, "ORGATIX TC-300", manufactured by Matsumoto Fine Chemical Co., Ltd.), titanium lactate (for example, "ORGATIX TC-310, 315", manufactured by Matsumoto Fine Chemical Co., Ltd.), titanium triethanol aminate (for example, "ORGATIX TC-400", manufactured by Matsumoto Fine Chemical Co., Ltd.), and a zirconyl chloride compound (for example, "ORGATIX ZC-126", manufactured by Matsumoto Fine Chemical Co., Ltd.).

Among these, titanium lactate ammonium salt (for example, "ORGATIX TC-300", manufactured by Matsumoto Fine Chemical Co., Ltd.), titanium lactate (for example, "ORGATIX TC-310, 315", manufactured by Matsumoto Fine Chemical Co., Ltd.), titanium triethanol aminate (for example, "ORGATIX TC-400", manufactured by Matsumoto Fine Chemical Co., Ltd.), and a zirconyl chloride compound (for example, "ORGATIX ZC-126", manufactured by Matsumoto Fine Chemical Co., Ltd.) are preferable.

«Water-soluble cationic polymer»

Examples of the water-soluble cationic polymer include polyallylamine, polyallylamine derivatives, poly-2-hydroxypropyldimethylammonium chloride, and poly(diallyldimethylammonium chloride).

The water-soluble cationic polymer can refer to the descriptions in known documents such as JP2011-042150A (particularly, paragraph 0156) and JP2007-098610A (particularly, paragraphs 0096 to 0108) as appropriate.

Examples of commercially available products of the water-soluble cationic polymer include SHALLOL (registered trademark) DC-303P and SHALLOL DC-902P (both manufactured by DKS Co., Ltd.), CATIOMASTER (registered trademark) PD-7and CATIOMASTER PD -30 (both manufactured by Yokkaichi Chemical Co., Ltd.) and UNISENCE FPA100L (manufactured by Senka Corporation).

In the present disclosure, the term "water-soluble" indicates a property in which a substance is dissolved in water at a certain concentration or higher.

In the present disclosure, as the "water-soluble" property, a property in which the amount of a substance to be dissolved in 100 g of water at 25°C is 5 g or greater (more preferably 10 g or greater) is preferable.

The content of the aggregating agent is not particularly limited.

From the viewpoint of the aggregation rate of the ink composition, the content of the aggregating agent is preferably in a range of 0.1% by mass to 40% by mass, more preferably in a range of 0.1% by mass to 30% by mass, still more preferably in a range of 1% by mass to 20% by mass, and particularly preferably in a range of 1% by mass to 10% by mass with respect to the total amount of the treatment liquid.

- Water -

It is preferable that the treatment liquid contains water.

The content of water is preferably in a range of 50% by mass to 90% by mass and more preferably in a range of 60% by mass to 80% by mass with respect to the total mass of the treatment liquid.

- Resin particles -

The treatment liquid may contain resin particles. In a case where the treatment liquid contains resin particles, an image having excellent rub resistance can be obtained.

From the viewpoint of improving the adhesiveness of an image to be obtained, the Tg of the resin particles is preferably 100°C or lower and more preferably 75°C or lower.

The resin particles contained in the treatment liquid are not particularly limited, and examples thereof include a polyurethane resin, a polyamide resin, a polyurea resin, a polycarbonate resin, a polyolefin resin, a polystyrene resin, a polyester resin, and an acrylic resin. Among these, the resin particles contain preferably a polyester resin or an acrylic resin and more preferably a polyester resin.

- Alicyclic structure or aromatic ring structure -

From the viewpoint of improving the glass transition temperature and the water contact angle, the resin contained in the resin particles has preferably an alicyclic structure or an aromatic ring structure in the structure and more preferably an aromatic ring structure in the structure.

As the alicyclic structure, an alicyclic hydrocarbon structure having 5 to 10 carbon atoms is preferable, and a cyclohexane ring structure, a dicyclopentanyl ring structure, a dicyclopentenyl ring structure, or an adamantane ring structure is preferable.

As the aromatic ring structure, a naphthalene ring or a benzene ring is preferable, and a benzene ring is more preferable.

The amount of the alicyclic structure or the aromatic ring structure is not particularly limited, and an amount thereof in which the glass transition temperature and the water contact angle of the resin particles are respectively in the above-described range can be preferably used. For example, the amount thereof is preferably in a range of 0.01 mol to 1.5 mol and more preferably in a range of 0.1 mol to 1 mol, per 100 g of the resin contained in the resin particles.

From the viewpoint that the resin particles used in the present disclosure are preferably water-dispersible resin particles described below, it is preferable that the resin contained in the resin particles used in the present disclosure contains an ionic group in the structure.

The ionic group may be an anionic group or a cationic group, but an anionic group is preferable from the viewpoint of ease of introduction.

The anionic group is not particularly limited, but a carboxy group or a sulfo group is preferable, and a sulfo group is more preferable.

The amount of the ionic group is not particularly limited, and an amount thereof in which the resin particles are water-dispersible resin particles can be preferably used. For example, the amount thereof is preferably in a range of 0.001 mol to 1.0 mol and more preferably in a range of 0.01 mol to 0.5 mol, per 100 g of the resin contained in the resin particles.

The content of resin particles is not particularly limited.

The content of the resin particles is preferably in a range of 0.5% by mass to 30% by mass, more preferably in a range of 1% by mass to 20% by mass, and particularly preferably in a range of 1% by mass to 15% by mass with respect to the total mass of the treatment liquid.

- Water-soluble solvent -

It is preferable that the treatment liquid contains at least one kind of water-soluble solvent.

As the water-soluble solvent, known solvents can be used without particular limitation.

Examples of the water-soluble solvent include polyhydric alcohol such as glycerin, 1,2,6-hexanetriol, trimethylolpropane, alkanediol (for example, ethylene glycol, propylene glycol (1,2-propanediol), 1,3-propanediol, 1,3-butanediol, 1,4-butanediol, 2-butene-1,4-diol, 2-ethyl-1,3-hexanediol, 2-methyl-2,4-pentanediol, 1,2-octanediol, 1,2-hexanediol, 1,2-pentanediol, or 4-methyl-1,2-pentanediol), or polyalkylene glycol (for example, diethylene glycol, triethylene glycol, tetraethylene glycol, pentaethylene glycol, dipropylene glycol, or polyoxyethylene polyoxypropylene glycol); polyhydric alcohol ether such as polyalkylene glycol ether (for example, diethylene glycol monoalkyl ether, triethylene glycol monoalkyl ether, tripropylene glycol monoalkyl ether, or polyoxypropylene glyceryl ether); and saccharides, sugar alcohols, hyaluronic acids, alkyl alcohols having 1 to 4 carbon atoms, glycol ethers, 2-pyrrolidone, and N-methyl-2-pyrrolidone described in paragraph 0116 of JP2011-042150A.

Among these, from the viewpoint of suppressing transfer of components, polyhydric alcohol or polyhydric alcohol ether is preferable, and alkanediol, polyalkylene glycol, or polyalkylene glycol ether is more preferable.

- Surfactant -

The treatment liquid may contain at least one kind of surfactant.

The surfactant can be used as a surface tension adjuster or an antifoaming agent. Examples of the surface tension adjuster or the antifoaming agent include a non-ionic surfactant, a cationic surfactant, an anionic surfactant, and a betaine surfactant. Among these, from the viewpoint of the aggregation rate of the ink composition, a non-ionic surfactant or an anionic surfactant is preferable.

Examples of the surfactant include compounds exemplified as surfactants in pp. 37 and 38 of JP1984-157636A (JP-S59-157636A) and Research Disclosure No. 308119 (1989). Further, other examples of the surfactant include fluorine (fluorinated alkyl)-based surfactants and silicone-based surfactants described in JP2003-322926A, JP2004-325707A, and JP2004-309806A.

In a case where the treatment liquid contains a surfactant, the content of the surfactant in the treatment liquid is not particularly limited, but the content thereof can be set such that the surface tension of the treatment liquid reaches preferably 50 mN/m or less, more preferably in a range of 20 mN/m to 50 mN/m, and still more preferably in a range of 30 mN/m to 45 mN/m.

For example, in a case where the treatment liquid contains a surfactant as an antifoaming agent, the content of the surfactant as an antifoaming agent is preferably in a range of 0.0001% by mass to 1% by mass and more preferably in a range of 0.001% by mass to 0.1% by mass with respect to the total amount of the treatment liquid.

- Other components -

The treatment liquid may contain other components in addition to the above-described components as necessary.

Examples of other components that may be contained in the treatment liquid include known additives such as a solid wetting agent, colloidal silica, an inorganic salt, a fading inhibitor, an emulsion stabilizer, a penetration enhancer, an ultraviolet absorbing agent, a preservative, an antibacterial agent, a pH adjuster, a viscosity adjuster, a rust inhibitor, a chelating agent, and a water-soluble polymer compound other than a water-soluble cationic polymer (for example, water-soluble polymer compounds described in paragraphs 0026 to 0080 of JP2013-001854A).

(Physical properties of treatment liquid)

From the viewpoint of the aggregation rate of the ink composition, the pH of the treatment liquid at 25°C is preferably in a range of 0.1 to 3.5.

In a case where the pH of the treatment liquid is 0.1 or greater, the roughness of the impermeable base material is further reduced and the adhesiveness of the image area is further improved. In a case where the pH of the treatment liquid is 3.5 or less, the aggregation rate is further improved, coalescence of dots (ink dots) caused by the ink composition on the surface of the impermeable base material is further suppressed, and the roughness of the image is further reduced. The pH of the treatment liquid at 25°C is more preferably in a range of 0.2 to 2.0.

The pH is measured in an environment of a temperature of 23°C and a relative humidity of 55% RH using a pH meter.

In the case where the treatment liquid contains an aggregating agent, from the viewpoint of the aggregation rate of the ink, the viscosity of the treatment liquid is preferably in a range of 0.5 mPa·s to 10 mPa·s and more preferably in a range of 1 mPa·s to 5 mPa·s.

The viscosity is a value measured using a VISCOMETER TV-22 (manufactured by TOKI SANGYO CO., LTD.) under a temperature condition of 25°C.

The surface tension of the treatment liquid at 25°C is preferably 60 mN/m or less, more preferably in a range of 20 mN/m to 50 mN/m, and still more preferably in a range of 30 mN/m to 45 mN/m. In a case where the surface tension of the treatment liquid is in the above-described range, the adhesiveness between the impermeable base material and the pretreatment liquid is improved.

The surface tension of the treatment liquid is measured using an Automatic Surface Tensiometer CBVP-Z (manufactured by Kyowa Interface Science Co., Ltd.) according to a plate method.

<Other steps>

The image recording method according to the embodiment of the present disclosure may further include other steps.

Examples of the other steps include a step of applying other ink compositions onto the surface of the base material.

It is preferable that the step of applying other ink compositions is performed before the above-described ink applying step.

By applying the ink composition according to the embodiment of the present disclosure onto other ink compositions (or a solidified material thereof) applied in the above-described step, in a case where the base material is observed from a side of the base material to which the ink composition has not been applied, another image between the image formed of the ink composition according to the embodiment of the present disclosure and the base material can be recorded using the region to which the ink composition according to the embodiment of the present disclosure has been applied as a base.

In a case where such an image is formed, a transparent base material is preferably used.

The method of applying other ink compositions is not particularly limited, and examples thereof include the same method as the ink jet method in the step of applying the ink composition according to the embodiment of the present disclosure onto the surface of the base material.

Further, other ink compositions are not particularly limited, and examples thereof include known aqueous inks.

As other ink compositions, only one or two or more kinds of ink compositions may be applied. By applying two or more kinds of other ink compositions described above, for example, it is possible to record a polychromic image between the base and the base material recorded with the ink composition according to the embodiment of the present disclosure.

In addition, the step of applying other ink compositions may be performed after the above-described ink applying step. As such an embodiment, for example, a step of applying other ink compositions to at least a part of a region on the surface of the base material to which the ink composition according to the embodiment of the present disclosure has been applied is exemplified.

According to the above-described step, it is possible to record another image on the ink composition according to the embodiment of the present disclosure using, as a base, the region on the surface of the base material, to which the ink composition according to the embodiment of the present disclosure has been applied.

(Image recorded material)

The image recorded material according to the embodiment of the present disclosure contains a base material and a solidified material of the ink composition according to the embodiment of the present disclosure.

It is preferable that the image recorded material according to the embodiment of the present disclosure is an image recorded material obtained by the image recording method according to the embodiment of the present disclosure.

The base material in the image recorded material according to the embodiment of the present disclosure has the same definition as that for the base material in the image recording method according to the embodiment of the present disclosure described above, and the preferred embodiments thereof are also the same as described above.

In the present disclosure, the "solidified material" indicates a material obtained by removing at least some of water and/or solvent components contained in the composition and is obtained, for example, by drying the composition containing water and/or solvent components.

It is preferable that the image recorded material according to the embodiment of the present disclosure further contains a solidified material of the treatment liquid in the above-described image recording method according to the embodiment of the present disclosure.

It is preferable that the solidified material of the treatment liquid is present in at least a part of a region between the solidified material of the ink composition according to the embodiment of the present disclosure and the base material.

Further, it is preferable that at least a part of the solidified material of the treatment liquid is in contact with at least a part of the solidified material of the ink composition according to the embodiment of the present disclosure.

Further, the image recorded material according to the embodiment of the present disclosure may further contain solidified materials of other ink compositions. Here, other ink compositions have the same definition as that for other ink compositions in the image recording method according to the embodiment of the present disclosure described above, and the preferred embodiments are also the same as described above.

It is preferable that the solidified materials of other ink compositions are present on at least a part of the solidified material of the ink composition according to the embodiment of the present disclosure.

In the image recorded material according to the embodiment of the present disclosure, the solidified material of the ink composition according to the embodiment of the present disclosure, the solidified material of the treatment liquid, and the solidified materials of other ink compositions may be contained alone or two or more kinds thereof, respectively.

<Laminate>

The image recorded material according to the embodiment of the present disclosure may be a laminate further including a base material for lamination on a side of the image recorded material where the image has been recorded.

The laminate is obtained, for example, by laminating a base material for lamination on the side of the image recorded material where the image has been recorded.

The base material for lamination may be laminated directly on a side of the image recorded material where the image has been recorded or through another layer (for example, an adhesive layer).

The base material for lamination in a case of being directly laminated on a side of the image recorded material where the image has been recorded can be laminated according to a known method such as thermocompression bonding or thermal fusion welding.

Further, the base material for lamination in a case of being laminated through an adhesive layer on a side of the image recorded material where the image has been recorded can be laminated according to, for example, a method of coating the side of the image recorded material where the image is recorded with an adhesive, placing the base material for lamination, and bonding the image recorded material to the base material for lamination.

Further, the base material for lamination in the case of being laminated through an adhesive layer on a side of the image recorded material where the image has been recorded can be laminated according to an extrusion lamination method (that is, sandwich lamination) or the like.

It is preferable that the adhesive layer in the mode of laminating the base material through the adhesive layer on a side of the image recorded material where the image has been recorded contains an isocyanate compound.

In a case where the adhesive layer contains an isocyanate compound, since the adhesiveness between the adhesive layer and the ink-derived layer of the image is further improved, the lamination intensity can be further improved.

As the base material for lamination, a resin base material is preferable.

The resin base material is not particularly limited, and examples thereof include a base material formed of a thermoplastic resin.

A base material obtained by molding a thermoplastic resin in the form of a sheet is exemplified as the resin base material.

It is preferable that the resin base material contains polypropylene, polyethylene terephthalate, nylon, polyethylene, or polyimide.

The shape of the resin base material is not particularly limited, but it is preferable that the resin base material is in the form of a sheet.

The thickness of the resin base material is preferably in a range of 10 $\mu$m to 200 $\mu$m and more preferably in a range of 10 $\mu$m to 100 $\mu$m.

(Image recording device)

An image recording device used for the image recording method according to the embodiment of the present disclosure is not particularly limited as long as the image recording device includes an image recording unit that performs an ink jet method.

As the image recording unit that performs an ink jet method, for example, known ink jet recording devices described in JP2010-083021A, JP2009-234221A, and JP1998-175315A (JP-H10-175315A) can be used.

Hereinafter, an example of the image recording device which can be used for the image recording method according to the embodiment of the present disclosure will be described with reference to Fig. 1.

The image recording device illustrated in Fig. 1 comprises a treatment liquid applying unit that applies the treatment liquid, and an image recording unit that performs an ink jet method.

Here, Fig. 1 is a schematic configuration view illustrating a configuration example of the image recording device.

As illustrated in Fig. 1, the image recording device includes a treatment liquid applying unit 12 comprising an anilox roller 20 and a coating roller 22 that is brought into contact with the anilox roller 20 as the roller materials used for sequentially applying the treatment liquid from a supply unit 11 of the base material toward the transport direction (the arrow direction in Fig. 1) of the base material; a treatment liquid drying zone 13 comprising a heating unit (not illustrated) used for drying the applied treatment liquid; an ink jetting unit 14 which jets various inks compositions; and an ink drying zone 15 where the jetted ink is dried.

In a case where the treatment liquid is not applied, the treatment liquid applying unit 12 and the treatment liquid drying zone 13 may not be provided.

The supply unit 11 of the base material in the image recording device may be a supply unit that supplies the base material from a case which is charged with the base material or a supply unit that supplies the base material from a roll around which the base material is wound in a roll shape.

The base material is sequentially sent by transport rollers 41, 42, 43, 44, 45, and 46 from the supply unit 11 through the treatment liquid applying unit 12, the treatment liquid drying zone 13, the ink jetting unit 14, and the ink drying zone 15, and then accumulated in an accumulation unit 16.

In the accumulation unit 16, the base material may be wound in a roll shape.

As the method of transporting the base material, a drum transport method using a drum-shaped member, a belt transport method, or a stage transport method using a stage may be employed in addition to the method of transporting the base material using a transport roller as illustrated in Fig. 1.

Among the plurality of arranged transport rollers 41, 42, 43, 44, 45, and 46, at least one transport roller can be formed into a driving roller to which the power of a motor (not illustrated) has been transmitted.

The base material is transported at a predetermined transport speed in a predetermined direction by rotating the driving roller rotating by the motor at a constant speed.

The treatment liquid applying unit 12 is provided with an anilox roller 20 disposed by being partially immersed in a storage tray in which the treatment liquid is stored and a coating roller 22 brought into contact with the anilox roller 20. The anilox roller 20 is a roller material for supplying a predetermined amount of the treatment liquid to the coating roller 22 disposed to oppose the image recorded surface of the base material. The base material is uniformly coated with the treatment liquid by the coating roller 22 to which an appropriate amount of the treatment liquid has been supplied from the anilox roller 20.

The coating roller 22 is configured so as to transport the base material in a pair with an opposing roller 24, and the base material passes between the coating roller 22 and the opposing roller 24 and is sent to the treatment liquid drying zone 13.

The treatment liquid drying zone 13 is disposed downstream of the treatment liquid applying unit 12 in the transport direction of the base material.

The treatment liquid drying zone 13 can be configured using known heating means such as a heater, air blowing means for blowing air such as a dryer or an air knife, and means for combining these.

Examples of the heating means include a method of installing a heating element such as a heater on a side of the base material opposite to the surface (that is, the image recorded surface) to which the treatment liquid has been applied (for example, in a case where the base material is automatically transported, below the transport mechanism for mounting and transporting the base material), a method of applying warm air or hot air to the surface of the base material to which the treatment liquid has been applied (that is, the image recorded surface), and a heating method using an infrared heater. Further, the heating means may be a combination of a plurality of the above-described methods.

In the treatment liquid drying zone 13, the solvent may be removed from the treatment liquid using a solvent removal roller or the like.

The ink jetting unit 14 is disposed downstream of the treatment liquid drying zone 13 in the transport direction of the base material.

In the ink jetting unit 14, recording heads (ink jet heads) 30K, 30C, 30M, 30Y, 30A, and 30B that are respectively connected to ink storage units storing inks with respective colors, which are black (K), cyan (C), magenta (M), yellow (Y), a special color ink (A), and a special color ink (B) are arranged. The respective ink storage units (not illustrated) are configured such that the ink compositions containing colorants corresponding to each color tone and water are stored and supplied to respective ink jet heads 30K, 30C, 30M, 30Y, 30A, and 30B as necessary during image recording.

Examples of the special color ink (A) and the special color ink (B) include a white ink composition, an orange ink composition, a green ink composition, a purple ink composition, a light cyan ink composition, and a light magenta ink composition.

In the image recording device applied to the image recording method according to the embodiment of the present disclosure, the ink jet heads 30A and 30B may not be provided. Further, the image recording device may comprise other special color ink jet heads in addition to the ink jet heads 30A and 30B.

Further, it is described that the ink jet heads 30A and 30B are positioned downstream of the yellow (Y) ink jet head 30Y in the transport direction of the base material in Fig. 1 for convenience, but the position thereof is not particularly limited and may be appropriately set in consideration of the brightness or the like of the special color inks.

For example, a form in which the ink jet heads 30A and 30B are positioned between the yellow ink jet head 30Y and the magenta ink jet head 30M or a form in which the ink jet heads 30A and 30B are positioned between the magenta ink jet head 30M and the cyan ink jet head 30C is considered.

Further, it is preferable that the ink jet head 30B is a white ink jet head.

The ink jet heads 30K, 30C, 30M, 30Y, 30A, and 30B are used to jet inks corresponding to each image from jet nozzles arranged to oppose the image recorded surface of the base material. In this manner, each color ink is applied onto the image recorded surface of the base material, and thus a color image is recorded.

The ink jet heads 30K, 30C, 30M, 30Y, 30A, and 30B are all full line heads in which a plurality of jet ports (nozzles) are aligned over the maximum recording width of an image to be recorded on the surface of the base material. The image recording can be performed on the base material at a higher speed as compared to a serial type head in which recording is performed while reciprocating and scanning a short shuttle head in the width direction (a direction orthogonal to the transport direction of the base material) of the base material.

In the present disclosure, any recording system, for example, a system that enables serial type recording or recording at a relatively high speed, such as a single pass system of forming one line by performing scanning once may be employed. According to the image recording method according to the embodiment of the present disclosure, a high-quality image with excellent reproducibility can be obtained even with the single pass system.

Here, the ink jet heads 30W, 30K, 30C, 30M, 30Y, and 30A all have the same structure.

Further, it is preferable that the image recording device according to the embodiment of the present disclosure includes a known maintenance unit (not illustrated). Examples of the known maintenance unit include known wiping units.

It is preferable that the application amount of the treatment liquid and the application amount of the ink composition are adjusted as necessary. For example, the application amount of the treatment liquid may be changed in order to adjust the physical properties such as the viscoelasticity and the like of the aggregate obtained by mixing the treatment liquid with the ink composition, depending on the base material.

The ink drying zone 15 is disposed downstream of the ink jetting unit 14 in the transport direction of the base material.

The ink drying zone 15 can be configured in the same manner as the treatment liquid drying zone 13.

The image recording device may further comprise a heating unit that performs a heat treatment on the base material in a transport path from the supply unit 11 to the accumulation unit 16.

For example, drying of the treatment liquid and drying and fixing of the ink composition can be effectively performed by disposing the heating unit at a desired position such as upstream of the treatment liquid drying zone 13 or between the ink jetting unit 14 and the ink drying zone 15 so that the base material is heated to a desired temperature.

Further, since the surface temperature of the base material changes depending on the kind (the material, the thickness, or the like) of the base material, the environmental temperature, and the like, it is preferable that the image recording device comprises a heating control mechanism including a measuring unit that measures the surface temperature of the base material; a heating control unit that controls the heating conditions; and a control unit that feeds back the value of the surface temperature of the base material measured by the measuring unit to the heating control unit.

In a case where the image recording device comprises the heating control mechanism, application of the treatment liquid and application of the ink composition can be performed while the temperature of the base material is controlled.

As the measuring unit that measures the surface temperature of the base material, a contact or non-contact type thermometer is preferable.

Examples

Hereinafter, the present invention will be described in more detail based on examples, but the present invention is not limited to the following examples unless the gist thereof is overstepped. Further, "parts" and "%" are on a mass basis unless otherwise specified.

<Synthesis of resin particles>

[Synthesis of resin particles A-1]

A three-neck flask provided with a stirrer, a thermometer, a reflux cooling pipe, and a nitrogen gas introduction pipe was charged with water (350 g) and heated to 80°C under a nitrogen stream. A mixed solution of sodium persulfate (radical polymerization initiator, manufactured by Fujifilm Wako Pure Chemical Corporation) (0.10 g) and water (20 g) was added thereto, and the solution was stirred for 10 minutes. Next, a suspension obtained by stirring methyl methacrylate (140 g), isobornyl methacrylate (40 g), methacrylic acid (20 g), NEOPELEX G-15 (16 mass% sodium dodecyl benzene sulfonate aqueous solution, manufactured by Kao Corporation) (35 g), and water (171 g) was added dropwise to the three-neck flask at a constant speed using a dropping pump such that the dropwise addition was completed in 3 hours while being continuously stirred, a mixed solution of sodium persulfate (0.98 g) and water (30 g) was added dropwise at a constant speed using another pump at the same timing such that the dropwise addition was completed in 3 hours, and the resulting solution was stirred for 1 hour after the completion of the dropwise addition. The obtained reaction solution was heated to 50°C, 63 g of a 2 mol/L sodium hydroxide aqueous solution was added thereto, and the resulting solution was further stirred for 1 hour. The solution was filtered through a mesh having a mesh size of 50 $\mu$m, thereby obtaining an aqueous dispersion of resin particles A-1 (concentration of solid contents: 23% by mass). The resin particles A-1 had a Tg of 150°C, a volume average particle diameter of 350 nm, and a weight-average molecular weight of 120000.

[Synthesis of resin particles A-2]

An aqueous dispersion of resin particles A-2 (concentration of solid contents: 24% by mass) was obtained according to the same method as that for the resin particles A-1 except that methyl methacrylate (120 g), isobornyl methacrylate (22 g), 2-ethylhexyl methacrylate (38 g), and methacrylic acid (20 g) were used in place of methyl methacrylate (140 g), isobornyl methacrylate (40 g), and methacrylic acid (20 g) in the synthesis of the resin particles A-1. The resin particles A-2 had a Tg of 90°C, a volume average particle diameter of 350 nm, and a weight-average molecular weight of 100000.

[Synthesis of resin particles A-3]

An aqueous dispersion of resin particles A-3 (concentration of solid contents: 23% by mass) was obtained by performing synthesis according to the same method as that for the resin particles A-1 except that the addition amount of NEOPELEX G-15 in the suspension was changed to 38.4 g and the addition amount of water in the suspension was changed to 168 g in the synthesis of the resin particles A-1. The resin particles A-3 had a Tg of 150°C, a volume average particle diameter of 300 nm, and a weight-average molecular weight of 120000.

[Synthesis of resin particles A-4]

An aqueous dispersion of resin particles A-4 (concentration of solid contents: 22% by mass) was obtained by performing synthesis according to the same method as that for the resin particles A-1 except that the addition amount of NEOPELEX G-15 in the suspension was changed to 46 g and the addition amount of water was changed to 162 g in the suspension in the synthesis of the resin particles A-2. The resin particles A-4 had a Tg of 90°C, a volume average particle diameter of 250 nm, and a weight-average molecular weight of 110000.

[Synthesis of resin particles A-5]

An aqueous dispersion of resin particles A-5 (concentration of solid contents: 22% by mass) was obtained by performing synthesis according to the same method as that for the resin particles A-1 except that the addition amount of NEOPELEX G-15 in the suspension was changed to 30 g and the addition amount of water was changed to 175 g in the suspension in the synthesis of the resin particles A-1. The resin particles A-5 had a Tg of 150°C, a volume average particle diameter of 500 nm, and a weight-average molecular weight of 130000.

[Synthesis of resin particle A-6]

An aqueous dispersion of resin particles A-6 (concentration of solid contents: 24% by mass) was obtained by performing synthesis according to the same method as that for the resin particles A-1 except that the addition amount of NEOPELEX G-15 in the suspension was changed to 27 g and the addition amount of water was changed to 177 g in the suspension in the synthesis of the resin particles A-1. The resin particles A-6 had a Tg of 150°C, a volume average particle diameter of 600 nm, and a weight-average molecular weight of 120000.

[Synthesis of resin particles P-1]

A three-neck flask provided with a stirrer, a thermometer, a reflux cooling pipe, and a nitrogen gas introduction pipe was charged with methyl ethyl ketone (281 g), and the solution was heated to 85°C. A mixed solution formed of methyl methacrylate (208 g), isobornyl methacrylate (60 g), methacrylic acid (30 g), methyl ethyl ketone (66 g), and "V-601" (polymerization initiator, manufactured by Fujifilm Wako Pure Chemical Corporation) (0.66 g) was added dropwise to the methyl ethyl ketone at a constant speed such that the dropwise addition was completed in 3 hours while the reflux state was maintained in the reaction container. After the completion of the dropwise addition, (1) the solution was stirred for 1 hour, a solution formed of "V-601" (0.66 g) and methyl ethyl ketone (3.5 g) was added thereto, and the resulting solution was stirred for 2 hours. Subsequently, the step of (1) was repeated four times, and a solution formed of "V-601" (0.66 g) and methyl ethyl ketone (3.5 g) was further added thereto, and the resulting solution was continuously stirred for 3 hours. After the temperature was lowered to 60°C, isopropyl alcohol (83 g) was added thereto.
Next, 155 g of the polymerization solution (the concentration of solid contents: 40% by mass) was weighed, and methyl ethyl ketone (7 g), isopropyl alcohol (23.1 g), a 20% maleic acid anhydride aqueous solution (0.6 g), and 2 mol/L of a sodium hydroxide (NaOH) aqueous solution (20 g) were added, and the temperature inside the reaction container was raised to 70°C. Next, 190 g of distilled water was added dropwise thereto for water dispersion. Thereafter, the temperature in the reaction container was maintained at 85°C under atmospheric pressure for 1 hour, the pressure in the reaction container was reduced, and isopropyl alcohol and methyl ethyl ketone were distilled off, thereby obtaining an aqueous dispersion of resin particles P-1 (30% by mass). The resin particles P-1 had a Tg of 150°C, a volume average particle diameter of 5 nm, and a weight-average molecular weight of 50000.

<Preparation of ink composition>

In each example and each comparative example, an ink composition was prepared by mixing components so as to have the composition described below and filtering the solution obtained by being stirred at room temperature for 1 hour using a membrane filter having a pore diameter of 5 μm.
The numerical values in the columns of "content" listed in Table 1 and parts by mass in the following composition indicate % by mass of the solid content of each compound in a case where the total mass of the ink composition was set to 100% by mass.

[Composition]

- Inorganic pigment particles listed in Table 1: added as a pigment dispersion described below so as to have the amount listed in Table 1
- Dispersant A (diethylethanolamine 80% neutralized product of stearyl methacrylate/benzyl methacrylate/hydroxyethyl methacrylate/methacrylic acid = copolymer at copolymerization ratio of 20/39/27/14 (mass ratio), Mw = 22000): added as a pigment dispersion described below so as to have the amount listed in Table 1
- Propylene glycol (manufactured by manufactured by Fujifilm Wako Pure Chemical Corporation): 20% by mass
- SOLSPERSE (registered trademark) 43000 (manufactured by Noveon Inc.): 0.100% by mass
- Polyvinylpyrrolidone K15 (manufactured by Tokyo Chemical Industry Co., Ltd.): 0.100% by mass
- SURFYNOL 104 (manufactured by Nissin Chemical Industry Co., Ltd.): 1.00% by mass
- SNOWTEX (registered trademark) XS (manufactured by Nissan Chemical Corporation): 0.060% by mass
- Resin particle dispersion shown below: the total content of the resin particles contained in the resin particle dispersion is the total content listed in Table 1
- BYK (registered trademark)-024 (manufactured by BYK-Chemie Japan KK): 0.01% by mass
- Water: remaining amount set such that total amount was 100% by mass

- Synthesis of Dispersant A -

The same mass of dipropylene glycol as the total amount of monomers described below was added to a three-neck flask equipped with a stirrer and a cooling pipe and heated to 85°C in a nitrogen atmosphere.

A solution I obtained by mixing 9.1 molar equivalents of stearyl methacrylate, 34.0 molar equivalents of benzyl methacrylate, 31.9 molar equivalents of hydroxyethyl methacrylate, 25.0 molar equivalents of methacrylic acid, and 0.8 molar equivalents of 2-mercaptopropionic acid and a solution II obtained by dissolving 1% by mass of t-butylperoxy-2-ethylhexanoate (Perbutyl O, manufactured by NOF Corporation) with respect to the total mass of the monomers in 20% by mass of dipropylene glycol with respect to the total mass of the monomers were respectively prepared. The solution I was added dropwise to the three-neck flask for 4 hours, and the solution II was added dropwise thereto for 5 hours.

After the completion of the dropwise addition, the resulting solution was allowed to further react for 2 hours, heated to 95°C, and heated and stirred for 3 hours so that all unreacted monomers were allowed to react. The disappearance of monomers was confirmed by the nuclear magnetic resonance ($^1$H-NMR) method.

The obtained reaction solution was heated to 70°C, 20.0 molar equivalents of dimethylaminoethanol (dimethylethanolamine) was added as an amine compound, propylene glycol was added thereto, and the resulting solution was stirred, thereby obtaining a 30 mass% solution of the dispersant A.

The constituent components of the obtained polymer were confirmed by $^1$H-NMR. Further, the weight-average molecular weight (Mw) determined by GPC was 22000.

In addition, the mass ratio of respective structural units in the dispersant A (structural unit derived from stearyl methacrylate/ structural unit derived from benzyl methacrylate/ structural unit derived from hydroxyethyl methacrylate/ structural unit derived from methacrylic acid) was 20/39/27/14. Here, the mass ratio does not include the mass of dimethylaminoethanol.

[Pigment dispersion]

The inorganic pigment particles and the dispersant A were added as a pigment dispersion prepared as described below.

A pigment dispersion was prepared in the following manner using a Lady Mill model LSG-4U-08 (manufactured by AIMEX Co., Ltd.). Inorganic pigment particles, a 30 mass% solution of the dispersant A, and ultrapure water were added to a container made of zirconia. Further, 0.5 mmφ zirconia beads (Torayceram beads manufactured by Toray Industries, Inc.) (ratio of inorganic pigment:beads = 1.125:1 (mass ratio)) were added thereto and mixed gently using a spatula.

The container made of zirconia was placed in a ball mill and dispersed at a rotation speed of 1000 rpm for 5 hours. After the dispersion was completed, the beads were removed by filtration with a filter cloth to obtain a pigment dispersion which was an aqueous pigment dispersion having a pigment concentration of 45% by mass.

Further, in each example or comparative example, the kind and the amount of the inorganic pigment particles and the amount of the dispersant A were appropriately set such that the final content reached the value listed in Table 1 and a pigment dispersion having a pigment concentration of 45% by mass was obtained.

[Resin particle dispersion]

In a case where only one kind of resin particles were contained in the ink composition in each example and each comparative example, an aqueous dispersion of the above-described resin particles A-1 to A-6 or P-1 or resin particles EP, PES, or PBT described below was used as a resin particle dispersion.

In a case where two or more kinds of resin particles were contained in the ink composition in each example and each comparative example, an aqueous dispersion of the above-described resin particles A-1 and an aqueous dispersion of the resin particles P-1 were mixed in advance to obtain a mixture such that the mass ratios thereof were set to the mass ratios in accordance with the contents of resin particles listed in the columns of "resin particles A" or "other resin particles" of Table 1, and the mixture was used as a resin particle dispersion. The concentration of solid contents in the mixture was set to 30% by mass.

<Evaluation of maintainability>

A GELJET (registered trademark) GX5000 printer head (manufactured by Ricoh Co., Ltd.) was prepared. The printer head is a line head in which 96 nozzles are arranged.

The printer head was fixedly disposed in an ink jet recording device having the same configuration as the ink jet recording device illustrated in Fig. 1.

The disposition here was made such that the direction in which 96 nozzles were arranged was inclined by 75.7° with respect to a direction orthogonal to a movement direction of a stage of an ink jet device on the same plane.

A liquid-repellent film containing a fluorine compound is provided on the ink jetted surface of the line head. The liquid-repellent film containing a fluorine compound is a monomolecular film (SAM film) of $C_8F_{17}C_2H_4SiCl_3$.

A polyethylene terephthalate (PET) base material (FE2001, thickness of 12 μm, manufactured by Futamura Chemical Co., Ltd.) was prepared as the base material, and the following ink applying step was performed in Examples 1 to 17 and Comparative Examples 1 and 2.

[Ink application step]

While the base material was allowed to move at a constant stage speed of 50 mm/sec, the ink composition prepared in each example or each comparative example was jetted to the surface of the recording medium, to which the treatment liquid had been applied, from the printer head based on the line system.

The ink composition was jetted under conditions of an ink droplet amount of 4.5 pL, a jetting frequency of 24 kHz, and a resolution of 1200 dpi × 1200 dpi (dot per inch).

Further, an ink composition which was degassed through a degassing filter and in which the temperature thereof was adjusted to 30°C was used as the ink composition.

[Method of evaluating maintainability]

In each example and each comparative example, the above-described ink composition was jetted under the above-described conditions until the total jetting amount reached 1 mL.

After the completion of the jetting, a φ40 mm roller made of silicone rubber was prepared, and a cloth (TORAYSEE (registered trademark) manufactured by Toray Industries, Inc.) was wound around the outer peripheral surface of the roller.

The ink composition on the ink jet head was wiped off by pressing the roller against the liquid-repellent film of the head such that the cloth and the liquid-repellent film were brought into contact with each other and the contact pressure therebetween was set to 30 kPa and allowing the roller to reciprocate at a speed of 50 reciprocations per minute.

One reciprocation in the reciprocating motion was set as once, the nozzle deterioration rate was calculated in a case where the number of times of wiping was 200, 500, 1000, and 2000, the evaluation was performed based on the following evaluation standards, and the evaluation results are listed in Table 1. The nozzle deterioration rate was calculated as the proportion (%) of nozzles in which deterioration (discoloration, scratches, chipping, scraping, peeling, and the like) was recognized in the total number of nozzles in the ink jet head. It can be said that the deterioration of nozzles is suppressed and the maintainability of the ink composition is high in a case where the number of times of wiping, in which the nozzle deterioration rate is less than 50%, increases.

- Evaluation standards -

5: The nozzle deterioration rate was less than 50% after 2000 times of wiping.
4: The nozzle deterioration rate was less than 50% after 1000 times of wiping, and the nozzle deterioration rate was 50% or greater after 2000 times of wiping.
3: The nozzle deterioration rate was less than 50% after 500 times of wiping, and the nozzle deterioration rate was 50% or greater after 1000 times of wiping.
2: The nozzle deterioration rate was less than 50% after 200 times of wiping, and the nozzle deterioration rate was 50% or greater after 500 times of wiping.
1: The nozzle deterioration rate was 50% or greater after 200 times of wiping.

<Evaluation of jetting stability>

A GELJET (registered trademark) GX5000 printer head (manufactured by Ricoh Co., Ltd.) was prepared. The printer head is a line head in which 96 nozzles are arranged.

The printer head was fixedly disposed in an ink jet recording device having the same configuration as the ink jet recording device illustrated in Fig. 1.

The disposition here was made such that the direction in which 96 nozzles were arranged was inclined by 75.7° with respect to a direction orthogonal to a movement direction of a stage of an ink jet device on the same plane.

A liquid repellent film containing a fluorine compound is provided on the ink jetted surface of the line head. The liquid-repellent film containing a fluorine compound is a monomolecular film (SAM film) of $C_8F_{17}C_2H_4SiCl_3$.

A polyethylene terephthalate (PET) base material (FE2001, thickness of 12 $\mu$m, manufactured by Futamura Chemical Co., Ltd.) was prepared as the base material, and the following ink applying step and drying step were sequentially performed in each example and each comparative example.

[Ink application step]

While the base material was allowed to move at a constant stage speed of 50 mm/sec, the ink composition prepared in each example or each comparative example was jetted to the surface of the recording medium, to which the treatment liquid had been applied, from the printer head based on the line system to form a dot image (jetting amount of 4.5 pL, image forming range of 7 mm $\times$ 9 mm).

The ink composition was jetted under conditions of an ink droplet amount of 4.5 pL, a jetting frequency of 24 kHz, and a resolution of 1200 dpi $\times$ 1200 dpi (dot per inch).

Further, an ink composition which was degassed through a degassing filter and in which the temperature thereof was adjusted to 30°C was used as the ink composition.

[Drying step]

The jetted ink composition immediately after image recording was dried at 70°C for 10 seconds.

After the completion of the image recording, the ink jet device was allowed to stand for 30 minutes (in an environment of 25°C and a relative humidity of 50%) without performing image recording.

After the completion of the standing, the image recording was performed, as the second image recording, by using another PET base material according to the same method as that for the first image recording.

After the completion of the second image recording, the ratio of the number of nozzles (jet failure nozzles) from which the ink was not jetted to the total number of nozzles in the ink jet head (jet failure nozzle rate, %) was calculated, the evaluation was performed based on the following evaluation standards, and the results are listed in Tables 1.

It can be said that the ink jet jetting stability is excellent as the number of jet failure nozzles decreases. That is, it can be said that the jetting stability is excellent as the numerical value (1 to 5) of the evaluation result in the following evaluation standards increases.

- Evaluation standards -

5: The jet failure nozzle rate was less than 20%.
4: The jet failure nozzle rate was 20% or greater and less than 40%.
3: The jet failure nozzle rate was 40% or greater and less than 60%.
2: The jet failure nozzle rate was 60% or greater and less than 80%.
1: The jet failure nozzle rate was 80% or greater.

[Table 1]

| | Inorganic pigment particles | | | Resin particles A | | | | Y/X | Other resin particles | | | | Dispersant | r/p | | | P²+R² | P²+(R+D)² | Evaluation results | |
|---|---|---|---|---|---|---|---|---|---|---|---|---|---|---|---|---|---|---|---|---|
| | Type | Particle diameter (nm) | Content | Type | Tg (C°) | Particle diameter (nm) | Content | | Type | Tg (C°) | Particle diameter (nm) | Content | Content | p% by volume | r% by volume | r/p | | | Maintainability | Jetting stability |
| Example 1 | T1 | 250 | 10 | A-1 | 150 | 350 | 6 | 1.4 | - | - | - | - | 1 | 2.4 | 5.0 | 2.1 | 136 | 149 | 5 | 5 |
| Example 2 | T1 | 250 | 10 | A-1 | 150 | 350 | 3 | 1.4 | P-1 | 150 | 5 | 3 | 1 | 2.4 | 2.5 | 1.0 | 136 | 149 | 5 | 5 |
| Example 3 | T1 | 250 | 10 | A-1 | 150 | 350 | 1 | 1.4 | P-1 | 150 | 5 | 5 | 1 | 2.4 | 0.8 | 0.3 | 136 | 149 | 5 | 5 |
| Example 4 | T1 | 250 | 10 | A-1 | 150 | 350 | 0.3 | 1.4 | P-1 | 150 | 5 | 5.7 | 1 | 2.4 | 0.3 | 0.1 | 136 | 149 | 3 | 5 |
| Example 5 | T1 | 250 | 10 | A-1 | 150 | 350 | 3 | 1.4 | - | - | - | - | 1 | 2.4 | 5.0 | 2.1 | 136 | 149 | 5 | 5 |
| | | | | A-2 | 90 | 350 | 3 | | - | - | - | - | | | | | | | | |
| Example 6 | T1 | 250 | 10 | A-2 | 90 | 350 | 6 | 1.4 | - | - | - | - | 1 | 2.4 | 5.0 | 2.1 | 136 | 149 | 5 | 5 |
| Example 7 | T1 | 250 | 10 | EP | 190 | 350 | 6 | 1.4 | - | - | - | - | 1 | 2.4 | 5.4 | 2.2 | 136 | 149 | 5 | 5 |
| Example 8 | T1 | 250 | 10 | PES | 225 | 350 | 6 | 1.4 | - | - | - | - | 1 | 2.4 | 4.4 | 1.8 | 136 | 149 | 3 | 5 |
| Example 9 | T1 | 250 | 10 | A-3 | 150 | 300 | 6 | 1.2 | - | - | - | - | 1 | 2.4 | 5.0 | 2.1 | 136 | 149 | 3 | 5 |
| Example 10 | T2 | 400 | 10 | A-5 | 150 | 500 | 6 | 1.3 | - | - | - | - | 1 | 2.4 | 5.0 | 2.1 | 136 | 149 | 4 | 5 |
| Example 11 | T3 | 500 | 10 | A-6 | 150 | 600 | 6 | 1.2 | - | - | - | - | 1 | 2.4 | 5.0 | 2.1 | 136 | 149 | 3 | 5 |
| Example 12 | T1 | 250 | 18 | A-1 | 150 | 350 | 6 | 1.4 | - | - | - | - | 1 | 4.4 | 5.0 | 1.1 | 360 | 373 | 3 | 5 |
| Example 13 | T1 | 250 | 10 | A-1 | 150 | 350 | 16 | 1.4 | - | - | - | - | 1 | 2.4 | 13.3 | 5.5 | 356 | 389 | 3 | 5 |
| Example 14 | R1 | 250 | 10 | A-1 | 150 | 350 | 6 | 1.4 | - | - | - | - | 1 | 2.4 | 5.0 | 2.1 | 136 | 149 | 5 | 5 |
| Example 15 | B1 | 250 | 10 | A-1 | 150 | 350 | 6 | 1.4 | - | - | - | - | 1 | 2.4 | 5.0 | 2.1 | 136 | 149 | 5 | 5 |
| Example 16 | Y1 | 250 | 10 | A-1 | 150 | 350 | 6 | 1.4 | - | - | - | - | 1 | 2.3 | 5.0 | 2.2 | 136 | 149 | 5 | 5 |
| Example 17 | T1 | 250 | 5 | A-1 | 150 | 350 | 6 | 1.4 | - | - | - | - | 1 | 2.4 | 5.0 | 2.1 | 136 | 149 | 5 | 5 |
| | Y1 | 250 | 5 | | | | | | | | | | | | | | | | | |
| Comparative Example 1 | T1 | 250 | 10 | - | - | - | - | 1.4 | PBT | 34 | 350 | 6 | 1 | 2.4 | 0 | 0 | - | - | 1 | 5 |

| | Inorganic pigment particles | | | Resin particles A | | | | Y/X | Other resin particles | | | | Disper-sant | r/p | | | P2 + R2 | P2 + (R + D)2 | Evaluation results | |
|---|---|---|---|---|---|---|---|---|---|---|---|---|---|---|---|---|---|---|---|---|
| | Type | Particle diameter (nm) | Content | Type | Tg (C°) | Particle diameter (nm) | Content | | Type | Tg (C°) | Particle diameter (nm) | Content | Content | p% by volume | r% by volume | r/p | | | Maintainability | Jetting stability |
| Comparative Example 2 | T1 | 250 | 10 | A-4 | 90 | 250 | 6 | 1.0 | - | - | - | - | 1 | 2.4 | 5.0 | 2.1 | 136 | 149 | 1 | 5 |

The abbreviations in Table 1 are as follows.

[Inorganic pigment particles]

- T1: R-930 (titanium oxide, manufactured by Ishihara Sangyo Kasha, Ltd.)
- T2: R-38L (titanium oxide, manufactured by Sakai Chemical Industry Co., Ltd.)
- T3: Titanium Oxide (500 nm) (titanium oxide, manufactured by Nanostructured & Amorphous Materials)
- R1: R-110-7 (diiron trioxide, manufactured by Titanium Kogyo, Ltd.), crushed to 250 nm using a mortar
- B1: Cobalt Blue 1024 (cobalt blue, manufactured by Asahi Kasei Kogyo Co., Ltd.), crushed to 250 nm using a mortar
- Y1: TY-100 (Titanium Yellow, manufactured by Ishihara Sangyo Kasha, Ltd.)

[Resin particles A]

- A-1: resin particles A-1 shown above
- A-2: resin particles A-2 shown above
- A-3: resin particles A-3 shown above
- A-4: resin particles A-4 shown above
- A-5: resin particles A-5 shown above
- A-6: resin particles A-6 shown above
- EP: TREPEARL (registered trademark) EP, manufactured by Toray Industries, Inc.
- PES: TREPEARL (registered trademark) PES, manufactured by Toray Industries, Inc.

[Other resin particles]

- P-1: resin particles P-1 shown above
- PBT: TREPEARL (registered trademark) PBT, manufactured by Toray Industries, Inc.

The average primary particle diameters measured by the above-described method are listed in the columns of "particle diameter (nm)" of the inorganic pigment particles in Table 1.

The glass transition temperatures of the resin particles measured by the above-described method are listed in the columns of "Tg" of the resin particles A or other resin particles in Table 1.

The volume average particle diameters measured by the above-described method are listed in the columns of "particle diameter (nm)" of the resin particles A or other resin particles in Table 1.

The values of Y/X which are obtained by dividing Y nm of the volume average particle diameter of the resin particles A by X nm of the average primary particle diameter of the inorganic pigment particles are listed in the columns of "Y/X" in Table 1. In a case where the value of Y/X is 1.1 or greater, this means that an expression of $Y \geq 1.1 \times X$ is satisfied.

p% by volume of the volume content of the specific pigment particles with respect to the entire ink composition, r% by volume of the volume content of the resin particles A with respect to the entire ink composition, and the values of r/p which are obtained by dividing r% by mass by p% by mass are listed in the columns of "r/p" in Table 1. In a case where the value of r/p is 0.2 or greater, this means that an expression of $r \geq 0.2 \times p$ is satisfied.

The values of $P^2 + R^2$ in a case where the content of the specific pigment particles with respect to the total mass of the ink composition is set to P% by mass and the content of all the resin particles contained in the ink composition with respect to the total mass of the ink composition is set to R% by mass are listed in the columns of "$P^2 + R^2$" in Table 1.

The values of $P^2 + (R + D)^2$ in a case where the content of the specific pigment particles with respect to the total mass of the ink composition is set to P% by mass, the content of all the resin particles contained in the ink composition with respect to the total mass of the ink composition is set to R% by mass, and the content of the dispersant with respect to the total mass of the ink composition is set to D% by mass are listed in the columns of "$P^2 + (R + D)^2$" in Table 1.

As listed in Table 1, in Examples 1 to 17 in which an image was recorded using the ink composition containing water, a dispersant, inorganic pigment particles having an average primary particle diameter of 100 nm or greater, and resin particles A having a glass transition temperature of 40°C or higher, and X nm of the average primary particle diameter of the inorganic pigment particles and Y nm of the volume average particle diameter of the resin particles A satisfy an expression of $Y \geq 1.1 \times X$, the maintainability was excellent.

In Comparative Example 1 in which the ink composition contained only the resin particles having a Tg of 34° as the resin particles, as compared to the above-described examples.

Further, even in Comparative Example 2 in which only the resin particles having Y/X of 1.0 were used, the maintainability was degraded.

As shown in the results of Examples 1 to 4, it was found that the maintainability was more excellent in a case where an expression of $r \geq 0.2 \times p$ was satisfied.

As shown in the results of Example 5, it was found that the maintainability was excellent even in a case where the ink composition contained two kinds of resin particles as the resin particles A.

As shown in the results of Examples 1 and 6 to 9, it was found that the maintainability was more excellent in a case where the glass transition temperature of the resin particles A was in a range of 80°C to 200°C.

As shown in the results of Examples 1 and 9, it was found that the maintainability was more excellent in a case where X and Y satisfy an expression of $Y \geq 1.3 \times X$.

As shown in the results of Examples 1, 10, and 11, it was found that the maintainability and the jetting stability were more excellent in a case where the average primary particle diameter of the specific pigment particles was in a range of 100 nm to 400 nm.

As shown in the results of Examples 1, 12, and 13, it was found that the maintainability and the jetting stability were more excellent in a case where all Expressions A-1 to A-3 were satisfied.

As shown in the results of Examples 1, 12, and 13, it was found that the maintainability and the jetting stability were more excellent in a case where all Expressions C-1 to C-4 were satisfied.

As shown in the results of Examples 14 to 17 and 18, it was found that ink compositions having excellent maintainability and jetting stability were able to be obtained even in a case where the kinds of the specific pigment particles were changed or two kinds of specific pigment particles were used in combination.

**Claims**

1. An inkjet ink composition comprising:

   water;
   a dispersant;
   inorganic pigment particles having an average primary particle diameter of 100 nm or greater; and
   resin particles A having a glass transition temperature of 40°C or higher,
   wherein X nm of an average primary particle diameter of the inorganic pigment particles and Y nm of a volume average particle diameter of the resin particles A satisfy $Y \geq 1.1 \times X$.

2. The inkjet ink composition according to claim 1,
   wherein the average primary particle diameter of the inorganic pigment particles is in a range of 100 nm to 400 nm.

3. The inkjet ink composition according to claim 1 or 2,
   wherein X and Y satisfy an expression of $Y \geq 1.3 \times X$.

4. The inkjet ink composition according to any one of claims 1 to 3,
   wherein p% by volume of a volume content of the inorganic pigment particles with respect to an entire ink composition and r% by volume of a volume content of the resin particles A with respect to the entire ink composition satisfy an expression of $r \geq 0.2 \times p$.

5. The inkjet ink composition according to any one of claims 1 to 4,
   wherein the glass transition temperature of the resin particles A is in a range of 80° to 200°C.

6. The inkjet ink composition according to any one of claims 1 to 5,
   wherein P% by mass of a content of the inorganic pigment particles with respect to a total mass of the ink composition and R% by mass of a content of all the resin particles contained in the ink composition with respect to the total mass of the ink composition satisfy all Expressions A-1 to A-3.

$$\text{Expression A-1: } P^2 + R^2 \leq 300$$

$$\text{Expression A-2: } P \geq 5$$

$$\text{Expression A-3: } R \geq 1$$

7. The inkjet ink composition according to any one of claims 1 to 5,
   wherein P% by mass of a content of the inorganic pigment particles with respect to a total mass of the ink composition, R% by mass of a content of all the resin particles contained in the ink composition with respect to the total mass of the ink composition, and D% by mass of a content of the dispersant with respect to the total mass of the ink composition satisfy all Expressions C-1 to C-4.

$$\text{Expression C-1: } P^2 + (R + D)^2 \leq 350$$

$$\text{Expression C-2: } P \geq 5$$

$$\text{Expression C-3: } R \geq 1$$

$$\text{Expression C-4: } D \geq 0.1$$

8. A maintenance method comprising:
   a step of wiping off the inkjet ink composition according to any one of claims 1 to 7 from an ink jet head used for jetting the inkjet ink composition.

9. The maintenance method according to claim 8,
   wherein the ink jet head is an ink jet head including a liquid-repellent film, and the wiping step is a step of wiping off the inkjet ink composition from the liquid-repellent film.

10. An image recording method comprising:
    a step of applying the inkjet ink composition according to any one of claims 1 to 7 onto a surface of a base material using an ink jet method.

11. An image recorded material comprising:

    a base material; and
    a solidified material of the inkjet ink composition according to any one of claims 1 to 7.

**Patentansprüche**

1. Tintenstrahltintenzusammensetzung umfassend:

   Wasser;
   ein Dispergiermittel;
   anorganische Pigmentpartikel mit einem durchschnittlichen primären Partikeldurchmesser von 100 nm oder darüber; und
   Harzpartikel A mit einer Glasübergangstemperatur von 40°C oder darüber,
   wobei X nm eines durchschnittlichen primären Partikeldurchmessers der anorganischen Pigmentpartikel und Y nm eines volumendurchschnittlichen Partikeldurchmessers der Harzpartikel A

   $Y \geq 1,1 \times X$ erfüllen.

2. Tintenstrahltintenzusammensetzung nach Anspruch 1,
   wobei der durchschnittliche primäre Partikeldurchmesser der anorganischen Pigmentpartikel in einem Bereich von 100 nm bis 400 nm liegt.

3. Tintenstrahltintenzusammensetzung nach Anspruch 1 oder 2,
wobei X und Y einen Ausdruck $Y \geq 1,3 \times X$ erfüllen.

4. Tintenstrahltintenzusammensetzung nach einem der Ansprüche 1 bis 3,
wobei p Vol.% eines Volumengehalts an den anorganischen Pigmentpartikeln bezogen auf die gesamte Tintenzusammensetzung und r Vol.% eines Volumengehalts an den Harzpartikeln A bezogen auf die gesamte Tintenzusammensetzung einen Ausdruck $r \geq 0,2 \times p$ erfüllen.

5. Tintenstrahltintenzusammensetzung nach einem der Ansprüche 1 bis 4,
wobei die Glasübergangstemperatur der Harzpartikel A in einem Bereich von 80° bis 200°C liegt.

6. Tintenstrahltintenzusammensetzung nach einem der Ansprüche 1 bis 5,
wobei P Masse% eines Gehalts an den anorganischen Pigmentpartikeln bezogen auf eine Gesamtmasse der Tintenzusammensetzung und R Masse% eines Gehalt an allen in der Tintenzusammensetzung enthaltenen Harzpartikeln bezogen auf die Gesamtmasse der Tintenzusammensetzung alle Ausdrücke A-1 bis A-3 erfüllen.

$$\text{Ausdruck A-1: } P^2 + R^2 \leq 300$$

$$\text{Ausdruck A-2: } P \geq 5$$

$$\text{Ausdruck A-3: } R \geq 1$$

7. Tintenstrahltintenzusammensetzung nach einem der Ansprüche 1 bis 5,
wobei P Masse% eines Gehalts an den anorganischen Pigmentpartikeln bezogen auf eine Gesamtmasse der Tintenzusammensetzung, R Masse% eines Gehalt an allen in der Tintenzusammensetzung enthaltenen Harzpartikeln bezogen auf die Gesamtmasse der Tintenzusammensetzung und D Masse% eines Gehalt an dem Dispergiermittel bezogen auf die Gesamtmasse der Tintenzusammensetzung alle Ausdrücke C-1 bis C-4 erfüllen.

$$\text{Ausdruck C-1: } P^2 + (R + D)^2 \leq 350$$

$$\text{Ausdruck C-2: } P \geq 5$$

$$\text{Ausdruck C-3: } R \geq 1$$

$$\text{Ausdruck C-4: } D \geq 0,1$$

8. Instandhaltungsverfahren umfassend:
einen Schritt des Abwischens der Tintenstrahltintenzusammensetzung nach einem der Ansprüche 1 bis 7 von einem zum Ausstoßen der Tintenstrahltintenzusammensetzung verwendeten Tintenstrahlkopf.

9. Instandhaltungsverfahren nach Anspruch 8,
wobei der Tintenstrahlkopf ein Tintenstrahlkopf ist, der einen flüssigkeitsabweisenden Film umfasst, und der Wischschritt ein Schritt des Abwischens der Tintenstrahltintenzusammensetzung von dem flüssigkeitsabweisenden Film ist.

10. Bildaufzeichnungsverfahren umfassend:
einen Schritt des Aufbringens der Tintenstrahltintenzusammensetzung nach einem der Ansprüche 1 bis 7 auf einer Oberfläche eines Grundmaterials unter Verwendung eines Tintenstrahlverfahrens.

**11.** Aufgezeichnetes Material umfassend:

ein Grundmaterial; und
ein verfestigtes Material der Tintenstrahltintenzusammensetzung nach einem der Ansprüche 1 bis 7.

## Revendications

**1.** Composition d'encre pour jet d'encre, comprenant :

de l'eau ;
un agent dispersant ;
des particules de pigment inorganique présentant un diamètre de particule primaire moyen supérieur ou égal à 100 nm, et
des particules de résine A présentant une température de transition vitreuse supérieure ou égale à 40 °C, dans laquelle X nm d'un diamètre de particule primaire moyen des particules de pigment inorganique, et Y nm d'un diamètre de particule moyen en volume des particules de résine A satisfont $Y \geq 1,1 \times X$.

**2.** Composition d'encre pour jet d'encre selon la revendication 1,
dans laquelle le diamètre de particule primaire moyen des particules de pigment inorganique est compris dans une plage allant de 100 nm à 400 nm.

**3.** Composition d'encre pour jet d'encre selon la revendication 1 ou 2,
dans laquelle X et Y satisfont une expression $Y \geq 1,3 \times X$.

**4.** Composition d'encre pour jet d'encre selon l'une quelconque des revendications 1 à 3,
dans laquelle p% en volume d'une teneur en volume des particules de pigment inorganique par rapport à une composition d'encre totale et r% en volume d'une teneur en volume des particules de résine A par rapport à la composition d'encre totale satisfont une expression $r \geq 0,2 \times p$.

**5.** Composition d'encre pour jet d'encre selon l'une quelconque des revendications 1 à 4,
dans laquelle la température de transition vitreuse des particules de résine A est comprise dans une plage allant de 80 °C à 200 °C.

**6.** Composition d'encre pour jet d'encre selon l'une quelconque des revendications 1 à 5,
dans laquelle P% en masse d'une teneur des particules de pigment inorganique par rapport à une masse totale de la composition d'encre et R% en masse d'une teneur d'une totalité des particules de résine contenues dans la composition d'encre par rapport à la masse totale de la composition d'encre satisfont toutes les expressions A-1 à A-3 :

$$\text{Expression A-1 : } P^2 + R^2 \leq 300$$

$$\text{Expression A-2 : } P \geq 5$$

$$\text{Expression A-3 : } R \geq 1.$$

**7.** Composition d'encre pour jet d'encre selon l'une quelconque des revendications 1 à 5,
dans laquelle P% en masse d'une teneur des particules de pigment inorganique par rapport à une masse totale de la composition d'encre, R% en masse d'une teneur de la totalité des particules de résine contenues dans la composition d'encre par rapport à la masse totale de la composition d'encre, et D% en masse d'une teneur de l'agent dispersant par rapport à la masse totale de la composition d'encre satisfont toutes les expressions C1-1 à C-4 :

$$\text{Expression C-1 : } P^2 + (R + D)^2 \leq 350$$

$$\text{Expression C-2 : } P \geq 5$$

$$\text{Expression C-3 : } R \geq 1$$

$$\text{Expression C-4 : } D \geq 0{,}1.$$

8.  Procédé de maintenance, comprenant l'étape suivante :
une étape pour essuyer la composition d'encre pour jet d'encre selon l'une quelconque des revendications 1 à 7 sur une tête pour jet d'encre utilisée pour projeter la composition d'encre pour jet d'encre.

9.  Composition d'encre pour jet d'encre selon la revendication 8,
dans laquelle la tête pour jet d'encre est une tête pour jet d'encre incluant un film repoussant les liquides, et l'étape d'essuyage est une étape pour essuyer la composition d'encre pour jet d'encre du film repoussant les liquides.

10. Procédé d'enregistrement d'image, comprenant l'étape suivante :
une étape pour appliquer la composition d'encre pour jet d'encre selon l'une quelconque des revendications 1 à 7 sur une surface d'un matériau de base à l'aide d'un procédé à jet d'encre.

11. Matériau pour enregistrement d'image, comprenant :

un matériau de base, et
un matériau solidifié de la composition d'encre pour jet d'encre selon l'une quelconque des revendications 1 à 7.

FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014095058 A
- JP 2014196590 A
- JP 2014210837 A
- JP 2011094112 A
- JP 2016193980 A
- JP 2016145312 A
- JP 2011073295 A
- JP 2011073339 A
- JP 2011063777 A
- JP 2009012361 A
- JP 2008274016 A
- JP 54059936 A
- JP 2003306623 A

- JP 2013223958 A
- JP 2011042150 A
- JP 2007098610 A
- JP 59157636 A
- JP S59157636 A
- JP 2003322926 A
- JP 2004325707 A
- JP 2004309806 A
- JP 2013001854 A
- JP 2010083021 A
- JP 2009234221 A
- JP 10175315 A
- JP H10175315 A

**Non-patent literature cited in the description**

- **J. BRANDRUP ; E. H. IMMERGUT.** Polymer Handbook. Wiley-Interscience, 1989

- *Research Disclosure No. 308119,* 1989